(19) **Europäisches Patentamt**

**European Patent Office**

**Office européen des brevets**

(11) **EP 1 357 157 B1**

(12) **EUROPEAN PATENT SPECIFICATION**

(45) Date of publication and mention
of the grant of the patent:
**20.09.2006 Bulletin 2006/38**

(51) Int Cl.:
***C09D 11/00*** *(2006.01)*

(21) Application number: **03008728.2**

(22) Date of filing: **16.04.2003**

(54) **Water-based ink for ink-jet printing**

Wässrige Tinte für den Tintenstrahldruck

Composition d'encre aqueuse pour l'enregistrement par jet d'encre

(84) Designated Contracting States:
**DE FR GB**

(30) Priority: **22.04.2002 JP 2002119149**
**22.04.2002 JP 2002119150**

(43) Date of publication of application:
**29.10.2003 Bulletin 2003/44**

(73) Proprietor: **KONICA CORPORATION**
**Tokyo 163 (JP)**

(72) Inventors:
• **Ninomiya, Hidetaka**
**Hino-shi,**
**Tokyo 191-8511 (JP)**

• **Tomotake, Atsushi**
**Hino-shi,**
**Tokyo 191-8511 (JP)**

(74) Representative: **Gille Hrabal Struck Neidlein Prop**
**Roos**
**Patentanwälte**
**Brucknerstrasse 20**
**40593 Düsseldorf (DE)**

(56) References cited:
**EP-A- 1 258 511       EP-A- 1 295 916**
**WO-A-01/96483        WO-A-97/18090**
**US-B1- 6 362 274**

**Description**

**FIELD OF THE INVENTION**

The present invention relates to a water-based ink for ink-jet printing, a colored particle aqueous dispersion used in the water-based ink, and an image forming method employing the water-based ink, particularly to a colored particle dispersion ink, water-based ink for ink-jet printing, and an image forming method, which is excellent in glossiness and color reproduction.

**BACKGROUND OF THE INVENTION**

In recent years, elimination of solvents and use of water-based constitution have been demanded in the field of recording materials and an inking material utilized for printers, printing machines, markers and writing tools. Especially, there have been widely used recording materials comprising mainly an aqueous solution of a water-soluble dye and those comprising mainly a fine particle dispersion of a pigment for a water-based ink of ink-jet recording.

In a water-based ink comprising a water-soluble dye, there is used an aqueous solution of a water-soluble dye selected from the group of dyes that are categorized mainly into acid dyes, direct dyes and some food dyes. To the aqueous solution is added a glycol or an alkanolamine as a wetting agent, a surfactant or an alcohol to adjust the surface tension, thickeners and other agents according to need. The water-based inks using water-soluble dyes are most commonly used because of their high reliability of anti-clogging at pen tips or in a printer. The water-based inks using water-soluble dyes, however, easily cause blotting on recording paper because they comprise an aqueous solution of dyes. Therefore, they have only limited uses and their print quality tends to be deteriorated due to blotting of the ink. In addition, water-soluble dyes, which only permeate into a recording paper sheet and are then dried to adhere to the recording paper sheet, are hardly considered to be "dyed". Thus, light fastness of such water-based inks is extremely low.

Further, in order to solve problems of low water resistance and low light fastness of the water-based inks utilizing the water soluble dyes, proposals of coloring water-dispersible resins with an oil soluble dye or a hydrophobic dye have been made, for example, in JP-A No. 55-139471 (the term, JP-A refers to an unexamined and published Japanese Patent Application), JP-A No. 58-45272, JP-A No. 3-250069, JP-A No. 8-253720, JP-A No. 8-92513, JP-A No. 8-183920 and JP-A No. 2001-11347.

Proposals have been made of not only dyeing a water dispersible resin with an oil soluble dye or a hydrophobic dye but also utilizing colored particles comprising a colorant and a resin that is coated with the colorant, and also utilizing colored particles comprised of a colorant and a resin the surface of which are further coated with a film-forming resin.

On the other hand, in a pigment ink comprising mainly fine particle dispersion of a pigment, disclosed have been several proposals of coating the surface of a pigment with a film-forming resin in order to overcome problems of low density or poor color reproduction quality due to bronzing, and further, to improve light fastness, dispersion stability and discharge stability. Examples of coating a pigment with a resin are described in JP-A No. 8-269374, JP-A No. 9-151342, JP-A No. 10-88045 and JP-A No. 10-292143.

In many cases when a dispersion of first particles comprising a water dispersible resin dyed with these oil soluble dyes or hydrophobic dyes, second particles in which fine particles of a colorant such as a dye or a pigment are mixed with a resin, or third particles in which the first or second particles are further covered with another resin is prepared, a stable particle dispersion containing the colorant in a high concentration cannot be obtained due to insufficient solubility or affinity of the colorant or the resin to an organic solvent. The colorant dissolved or dispersed in a solvent is likely to precipitate, the resin is difficult to be mixed with the colorant, or the colorant is localized on the particle surface (the colorant is not covered with the resin), and therefore, ink for ink jet printing cannot be obtained which provides an image with high density. Further, in such particles, there are problems in that the effect to improve light fastness is decreased, and properties such as dispersion stability and ink jetting stability, which are needed for ink utilized for ink-jet printing.

Some methods have been proposed, in which a colored particle dispersion formed by dispersing a mixture of a colorant and resin in water is used as an ink for ink-jet printing.

Among such the methods, examples of ones characterized in the resin used therein include that disclosed in Japanese Patent Publication Open to Public Inspection, hereinafter referred to as JP O.P.I. Publication, No. 2001-98194 in which a copolymer resin constituted by a hydrophilic polymer chain moiety and a hydrophobic polymer chain moiety is used, that disclosed in JP O.P.I. Publication No. 2000-191968 in which a vinyl polymer formable unsaturated acid monomer, a hydroxide group-including monomer and a styrene macromer are used and that disclosed in JP O.P.I. Publication No. 9-157508 in which a polyester resin containing a cyclohexene dicarboxylic acid is used.

However, a satisfactory colored particle cannot obtained yet since the foregoing colored particles are insufficient in their properties such as that the particle diameter thereof is as large as about 100 nm, the storage ability and the ejecting ability of the ink are low, the printing density of the ink is low and the color appearance and the light fastness of the ink are insufficient.

JP O.P.I. Publication No. 9-157508 describes an aqueous dispersion of complex colored particle having a core/shell structure which is obtained by a procedure in which a polyester resin and an oil-soluble dye are dissolved and dispersed, and further polymerized with an ethylenic unsaturated monomer.

However, such the core/shell structured colored particle is not suitable for practical use since the particle diameter is large and there is a problem on the stability of the dispersion.

JP O.P.I. Publication Nos. 2002-47440, 2002-88294 and 2002-97395 disclose a small diameter colored particle having a diameter of not more than 50 nm. However, the effect of the small particle is insufficient since the dispersion stability and the storage ability of the particle are insufficient and the particles are secondarily coagulated on the occasion of printing. Moreover, these publications do not describe with respect to the core/shell type particle. JP O.P.I. Publication Nos. 2002-80746 and 2002-80772 disclose a composition in which an oil-soluble dye dissolved in a high-boiling organic solvent is dispersed in an aqueous medium. However, this composition is instable and the ejecting ability of the ink is unstable when a medium such as gelatin is not contained.

Accordingly, a small particle ink cannot be obtained yet, which has sufficiently small diameter and high dispersion stability, storage ability and ejecting stability, and is sufficient in the printing density, color reproducibility and light fastness of image.

Generally, the transparency of dispersion is made higher accompanied with the reducing of diameter the dispersed particle. The following publications describe with respect to the fine particle.

For example, JP O.P.I. Publication 9-67958 describes a suspension of polyester having an average diameter of from 0.005 to 0.5 $\mu$m in which a dye is enclosed; JP O.P.I. Publication No. 10-67958 describes a polymer particle having the maximum particle diameter of not more than 1.000 nm and an average particle diameter of from 5 to 700 nm and a dye having a group capable of bonded with the polymer particle in the molecule thereof; and JP O.P.I. publication No. 2000-474440 describes a particle having an average particle diameter of 25 nm.

However, there is no description in these publications with respect to the peak particle diameter, the particle diameter distribution and the relation between the absorption and the scattering and any information regarding these values, the glossiness and the color reproducibility is not disclosed even though description regarding the average particle diameter is included in the publications.

## SUMMARY OF THE INVENTION

The object of the invention is to provide a colored particle dispersion which is small in the particle diameter and excellent in the dispersion stability, and the ink prepared by the particle is excellent in the printing density, light fastness and the glossiness; and to provide an aqueous ink, an ink for ink-jet printing and an image forming method using the colored particle.

The other object of the invention is to provide a colored particle dispersion ink by which high glossiness after printing and the excellent color reproducibility can be obtained, and to provide an image forming method using the ink as an aqueous ink for ink-jet printing.

The invention and the embodiment are described.

1. An ink for ink jet recording comprising colored particles containing a dye and a resin, the colored particles being dispersed in an aqueous medium, wherein a weight average molecular weight of the resin is from 2,000 to 50,000, and a solubility parameter of the resin is from 16 to 19 (MPa) $^{1/2}$ and wherein a particle diameter at a peak of particle diameter distribution curve of the colored particles is from 5 to 50 nm.

2. The ink mentioned above wherein the resin is dissolved in ethyl acetate in a ratio of not less than 50% by weight at 25 °C.

3. The ink mentioned above wherein each of the colored particle has a core resin and a shell resin covering the core resin, and the colorant is a dye.

4. The ink mentioned above wherein the core resin and the shell resin satisfies formula of

$$|A-B| \leq 2 \, (MPa)^{1/2}$$

wherein A is a solubility parameter of the shell resin and B is a solubility parameter of the core resin.

5. The ink mentioned above wherein the shell resin comprises a polymer containing a monomer unit having an anionic group or a nonionic group.

8. The ink mentioned above wherein the colored particles satisfy the following ratio condition:

```
     (Height at the peak of the particle diameter distribution curve)/(Height at the diameter having 2 times of particle diameter at the peak of the particle diameter

distribution curve) ≥ 1.5.
```

9. The ink mentioned above wherein the ink has light absorbance at 850 nm of not more than 2.5 when the ink is diluted so that the light absorbance at the maximum absorbing wavelength is to be 100.

10. The ink mentioned above wherein the colorant of the colored particles is a dye and each of the colored particle has a core/shell structure.

11. The ink mentioned above wherein the colored particles are prepared by
forming colored particles dispersion comprising colored particles containing a colorant and resin dispersed in aqueous medium, and
shelling each particle of the colored particles with resin.

12. The ink mentioned above wherein the colored particles dispersion is formed by dissolving a resin and colorant in an organic solvent, emulsion dispersing the resulting solution or dispersion in water, and then removing the organic solvent.

13. The ink mentioned above wherein the colored particles dispersion is formed by preparing a resin particles dispersion by emulsion polymerization, and adding a dye solution containing a dye dissolved in an organic solvent to the dispersion.

14. The ink mentioned above wherein shelling is conducted by adding a monomer having a polymerizable double bond to the colored particles, and emulsion polymerizing the monomer so as to adsorb on the colored particles.

15. The ink mentioned above wherein the ink was subjected to a heat treatment at not less than 35 °C in the course of production of the ink.

16. The ink mentioned above wherein the ink was subjected to a heat treatment at not less than 35 °C in the course of production of the colored particles.

17. An image forming method comprising a step of ejecting the ink of item 1 from an ink-jet head in a droplet state to be adhered onto an ink receiving medium.

18. An image forming method mentioned above, wherein the ink receiving medium has a porous ink receiving layer.

## BRIEF DESCRIPTION OF THE DRAWING

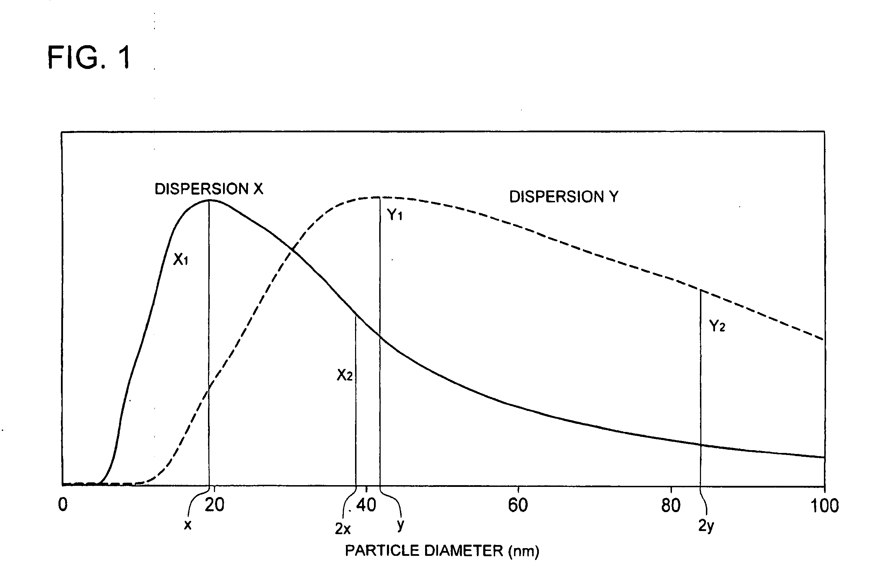

Fig. 1 shows a particle diameter distribution curve of the colored particles.

## DETAILED DESCRIPTION OF THE INVENTION

The water-based ink of the present invention comprises colored particles dispersed in an aqueous medium, and may optionally contain additives.

As a result of the investigation the inventors on the above-mentioned problems, it is that it is effective to use colored particle containing colored particle comprising a dye and a resin in which the weight average molecular weight of the resin is from 2,000 to 50,000 and the solubility parameter SP is from 16 to 19 $(MPa)^{1/2}$ and wherein the particle size is as defined in claim 1.

It is necessary to form a miscible state by using the dye, the resin and an organic solvent on the occasion of preparation of the colored particle. It is found that the miscible state can be realized, and the stable fine particle can be obtained by controlling the weight average of the molecular weight and the solubility parameter so as to be within the foregoing range, since the precipitation of the colorant at the time of dispersion is inhibited and the components can be crashed without increasing viscosity and coagulation of the particles is also inhibited.

The colored particle preferably has a core/shell structure in the invention. It is found that a more stable particle can be obtained by suitably controlling the balance between the solubility parameter of the polymer of the core and that of the polymer of the shell since the formation of new particle can be inhibited by such the control.

When an image is formed by the use of the aqueous ink according to the invention which is prepared by using the colored particle, the image having high optical density and high light fastness can be obtained. Moreover, high glossiness can be obtained since light scattering at the surface of the image is inhibited when the aqueous ink or the ink-jet ink using the stable fine colored particle dispersion according to the invention is used. Such the high glossiness can not be obtained by the use of an ink using usual colored particle dispersion.

Usually the use of the ink containing the colored particles is disadvantageous for the glossiness and color reproducibility since the particles of the ink tend to be heaped up and irregularity of the surface tends to be formed because the solid content of such the ink is larger than that of the pigment. However, it has been found that, in the case of the peak particle diameter is not more than 50 nm, the influence on the scattering is difficultly appeared even when the solid content is the same, and the scattering is further made small by suitably controlling the ratio of the particles each having the diameter the same as the peak particle diameter to the particles each having the diameter the same as 2 times of the peak particle diameter since the particles are most compactly filled on the occasion of absorption of water or solvent in the ink.

The transparency of the ink is raised and the ink excellent in the stability, glossiness and the color reproducibility can be obtained by making larger the ratio of the light absorbancy at the maximum absorption wavelength to that at the infrared region.

It is found that the colored particle with low scattering can be obtained by forming a core/shell structure using a suitable resin and by subjecting to heating treatment or aging after the formation of the colored particle or after the preparation of the ink.

<Resin>

The resin or polymer relating to the invention is described below.

As the resin relating to the invention, a polymer prepared by radical polymerization of a vinyl monomer having a polymerizable ethylenic unsaturated double bond is preferred.

The invention is described in detail below.

The number average molecular weight of the polymer to be used in the invention is preferably from 500 to 100,000, particularly from 1,000 to 30,000, from the view point of the layer forming ability after printing, the durability of the layer and the suspension forming ability.

It is preferable to use at least one kind of polymer having a Tg of not less than 10 °C even though the polymer may has a variety of Tg.

Preferably usable polymer is a polymer obtained by radical polymerization of a vinyl monomer having a polymerizable ethylenic double bond such as and an acrylate polymer, a styrene-acrylate copolymer and a vinyl acetate-acrylate copolymer.

Concrete examples of the monomer for forming the foregoing polymer include vinyl acetate, methyl acrylate, ethyl acrylate, n-butyl acrylate, t-butyl acrylate, 2-ethylhexyl acrylate, iso-nonyl acrylate, dodecyl acrylate, octadecyl acrylate, 2-phenoxyethyl acrylate, methyl methacrylate, ethyl methacrylate, n-butyl methacrylate, isobutyl methacrylate, 2-ethylhexyl methacrylate, 2-hydroxyethyl methacrylate, dodecyl methacrylate, octadecyl methacrylate, cyclohexyl methacrylate, stearyl methacrylate, benzyl methacrylate, glycidyl methacrylate, phenyl methacrylate, styrene, $\alpha$-methylstyrene and acrylonitrile, and a glycidyl methacrylate modified by soy bean oil aliphatic acid such as Bremmer G-FA manufactured by NOF Corporation.

The resin to be used in the colored particle according to the invention which has the solubility parameter of from 16 to 19 (MPa)$^{1/2}$ and the weight average of from 2,000 to 50,000 can be obtained by combining the foregoing monomers.

A more preferable example of the resin is a copolymer prepared by styrene or methyl methacrylate as the principal ingredient and at least one of a long-chain (meth)acrylate such as acetoacetoxyethyl methacrylate and glycidyl methacrylate modified by soy bean oil aliphatic acid, Bremmer G-FA manufactured by NOF Corporation, n-butyl acrylate, stearyl acrylate and 2-ethylhexyl acrylate, furthermore, acrylonitrile, divinylbenzene, diethylene glycol dimethacrylate according to necessity for improving the physical property of the resin.

The foregoing polymer may have a substituent. The substituent may have a structure of straight chain, branched chain or cycle. The polymer having the functional group may be synthesized by an ordinary method even though various kinds of such the polymer are available on the market. These copolymers can be obtained by a method in which an epoxy group is introduced in a polymer molecule then the monomer is condensed-polymerized with another monomer or graft polymerized by the assist of light or radiation.

Weight average molecular weight of resin

It is necessary that the weight average molecular weight of the resin relating to the invention is within the range of from 2,000 to 50,000, preferably from 2,000 to 30,000, more preferably from 2,000 to 15,000.

The weight average molecular weight of the resin relating to the invention can be determined by a gel permeation chromatography GPC using tetrahydrofuran THF as the solvent. The determination is performed by the following procedure: 0.5 to 5.0 mg, concretely 1 mg, of the sample to be measured is taken and 1.0 ml of THF is added to the sample and sufficiently stirred by a stirrer such as a magnetic stirred at an ordinary temperature to dissolve the sample. Then the solution is treated by a membrane filter having a pore size of from 0.45 to 0.50 $\mu$m and injected into the GPC apparatus. For the GPC measurement, the column is stabilized at 40 °C and THF is flown in a flow rate of 1.0 ml per minute, and then 100 $\mu$l of the sample solution having a concentration of 1 mg/ml is injected. A combination of a polystyrene gel column available on the market is preferably used as the column. Examples of the column include a combination of Shodex GPC KF-801, 802, 803, 804, 805, 806 or 807, each produced by Showa Denko Co., Ltd., and a combination of TSK Gel G1000H, G2000H, G3000H, G5000H, G6000H, G7000H or TSK guard column. As the detector, a refraction detector or ID detector, or a UV detector is preferably applied. In the molecular weight determination of the sample, the molecular weight distribution of the sample is determined using a calibration curve prepared by using a monodispersed polystyrene standard particle. Ten kinds of the polystyrene are preferably used for preparing the calibration curve.

<Solubility parameter>

For realizing the suitable miscible state on the occasion of preparation of the colored particle, it is necessary that the solubility parameter (SD value) of the resin relating to the invention is from 16 to 19 (MPa)$^{1/2}$, preferably from 17 to 19 (MPa)$^{1/2}$, more preferably from 17.5 to 18.5 (MPa)$^{1/2}$.

The solubility parameter will be explained in detail below.

The solubility parameter, which is used in evaluating solubility of a non-electrolyte in an organic solvent, is a value obtained from Hilderbrand's solubility parameter. The solubility parameter is described in J. H. Hilderbrand, J.M. Prausnitz, R.L. Scott, "Regular and Related Solutions", Van Nostrand-Reinhold, Princeton (1970), or "Kobunshi Data Handbook (Kisohen)" edited by Kobunshi Gakkai. The solubility parameters of various solvents are described in A.F.M. Baron, "Handbook of Solubility Parameters and Other Cohesion Parameters", CRC Press, Boca Raton/Florida (1983) or "Kobunshi Data Handbook (Kisohen)" edited by Kobunshi Gakkai.

The solubility parameter SP of materials is defined by the following formula:

$$SP = (\delta E/V)^{1/2}$$

wherein $\delta E$ represents cohesion energy per mole, and V represents mole volume.

The solubility parameter can be obtained according to several methods such as a solubility method, a vaporization heat method, a vapor pressure method, a wetting method, a surface tension method, a heat expansion coefficient method, and a refractive index method.

In the invention is used a solubility parameter obtained according to any one of the following methods. In the invention, unit of the solubility parameter is (MPa)$^{1/2}$.

The solubility parameter of materials can be obtained from solubility of the materials in various solvents having a known SP. This method is effective in obtaining an SP of a polymer etc., the chemical structure of which is unknown.

A material is dissolved in various organic solvents whose SP is known, for example, ethanol, acetone, methyl ethyl ketone, and ethyl acetate, and the SP of the polymer is determined from the SP of the solvents having higher solubility of the material. SP has, as its components, $\delta d$ (a dispersion force term), $\delta p$ (a polarity term), and $\delta h$ (a hydrogen bond term). Each term is plotted with respect to solvents having higher solubility of the material, and the median of each term is obtained. Employing the median value, the SP of the polymer can be obtained. (See C. M. Hansen, J. Paint Technol., 39(505) 104 (1967), or C. M. Hansen, J. Paint Technol., 39(511) 505 (1967).)

It is difficult to obtain the SP of a polymer having a low solubility in a solvent according to a solubility method. A method is described in the literatures described above which determines the SP of such polymer employing a suspension method. A solvent having an SP closer to that of a material has higher wettability to the material. A pigment to determine its SP is mixed with a solvent while stirring to obtain a suspension. Solvents (plural solvents) providing a good suspension ability are selected from solvents whose SP is known, for example, ethanol, acetone, methyl ethyl ketone, and ethyl acetate, and $\delta d$ (a dispersion force term), $\delta p$ (a polarity term), and $\delta h$ (a hydrogen bond term) of each of the selected solvents are plotted, and the median of each term is obtained. Setting the resulting median equal to each term of the SP of the pigment, the SP of the pigment (for example, a pigment) can be obtained.

The solubility parameter of a material can be determined by calculation, when the chemical structure of the material is known. Considering a chemical composition and an SP of a material, Small proposed a calculation method of determining the SP by dividing the sum of molar gravitation constant $\Delta F$ of the molecule by a molar volume V. In this method, $\Delta F$ can be assigned to each atomic group in the molecule, and the calculation is easily carried out.

$$S = (\Sigma \ \Delta F)/V$$

However, the Small method only comprises cohesive energy generated from dispersion force. In order to increase the calculation accuracy, Rheinneck, Hoy, Krevelen, and Fedors et al. proposed a different amended $\Delta F$. Hansen proposed parameters divided into three dimensions. The SP calculated from each proposal above also varies slightly, but when calculating the difference in SP between materials in the invention employing the SP calculated above, the error is small. When the chemical structure is known, the SP of the material can be calculated employing the amended parameter described above. A calculation program used in the invention is a Project Leader in a molecular calculation package, so-called CAChe by Fujitu Co., Ltd.

In the invention, the solubility parameter determined according to any one of the methods described above is used, but the solubility parameter of a solvent may slightly vary due to methods determining the SP. When the solubility parameter of a material is determined from its solubility to the solvent, employing such a solvent solubility parameter, it also varies in accordance with variation of the solvent solubility parameter. However, the difference of the solubility parameter determined is not so large. With respect to the difference in SP between different materials, the minimum difference is adopted.

Practically values of solubility parameter shown in "POLYMER HANDBOOK" Third Ed., by J. Brandrup and E. H. Immergut, published by John Wiley & Sons (1989) are fundamentally employed in the invention. Values calculated by simulation are also employed when the value is not found the above referred "POLYMER HANDBOOK".

The Tg of the polymer is not particularly limited. However, it is preferable to use at least one polymer having a Tg of at least 10 °C.

COLORED PARTICLE DISPERSION

The colored particle dispersion according to the invention is described.

The colored particle aqueous dispersion of the invention can be obtained by a method of dissolving (or dispersing) the resin (plural resins may be used) and the dye as described above in an organic solvent, emulsion dispersing the resulting solution or dispersion in water, and then removing the organic solvent. The colored particle aqueous dispersion can be also obtained by various methods, for example, a method of preparing a resin particles dispersion by emulsion polymerization, adding a dye solution in which the dye is dissolved in an organic solvent to the dispersion so that the resin particles are impregnated with the dye. The colored particle aqueous dispersion satisfying the relationship described above provides high color density and high dispersion stability.

Such a colored particle aqueous dispersion of color particles containing a resin and a colorant provides less coagulation and high dispersion stability, and is advantageously used for preparing an ink jet ink containing colored particles. In order to further prevent coagulation of the colored particle aqueous dispersion for a long term, to improve dispersion stability of ink containing the dispersion, and to provide ink image with high color tone, good glossiness, and high fastness such as light fastness, the colored particles as cores are preferably coated with a polymer shell comprised of an organic polymer to form a shell.

As a method of forming a shell, a polymer solution in which the polymer is dissolved in an organic solvent is added to colored particles so that the polymer is adsorbed on the surface of the colored particles as cores. In the invention, a method is preferred which prepares colored particles, containing a colorant and a resin, which form cores, adding a monomer having a polymerizable double bond to the colored particles, and emulsion polymerizing the monomer in the presence of a surfactant to adsorb on the colored particles and form a polymer shell on the cores. For example, when a dye is used as a colorant in this method, various phases are mixed at the interface between the cores and shell, and therefore, the dye content of the shell is not necessarily zero. However, the dye content of the shell is preferably less. The colorant content of the shell is preferably not more than 0.8 times that of the cores before the shell is formed, and more preferably not more than 0.5 that of the cores before the shell is formed.

Examples of the monomer having a polymerizable double bond for forming a polymer shell include ethylene, propylene, butadiene, vinyl chloride, vinylidene chloride, vinyl acetate, styrene, (meth)acrylate, meth(acrylic acid, or acryl amide. The monomer is preferably styrene, or (meth)acrylate such as ethyl meth(acrylate), butyl meth(acrylate), or ethylhexyl meth(acrylate). A polymerizable monomer having a hydroxy group in the molecule such as a hydroxyalkyl meth(acrylate), typically, hydroxyethyl (meth)acrylate is preferably used in an amount of at maximum 50% by weight, based on the total weight of monomers forming a shell together with another monomer. Further, in order to increase stability of a shell, an ethylenically unsaturated monomer having a group with a pKa of from 3 to 7, for example, a carboxyl group-containing monomer such as acrylic acid or methacrylic acid or a sulfonic acid group-containing monomer may be used in an amount of not more than 10% by weight, and in an amount less than that of the aforementioned monomer having a hydroxy group, based on the total monomer weight. It is desirable to use the aforementioned monomer having a hydroxy group in the molecule (practically a monomer forming hydrophilic polymer such as acrylic acid, methacrylic acid and so on) for forming a shell to be hydrophilic, whereby the colored particle aqueous dispersion containing the core/shell colored particles having high dispersion stability is stably prepared.

The core polymer preferably has solubility of not less than 50% by weight of the resin in ethyl acetate at 25 °C.

Reactive Emulsifier

The group forming a hydrophilic polymer can be added in a form of a reactive emulsifier, and stronger and more stable shell can be formed by copolymerization during polymerization reaction.

Examples of the emulsifier include a nonionic one such as Aquaron RN-10, RN-20, RN-30, RN-50 (product by DAI-ICHI KOGYO SEIYAKU CO,. LTD), ADEKA REASOAP NE-10, NE-20, NE-30 (product by Asahi Denka Co., Ltd.), and an anionic one such as Aquaron HS -10, HS -20, HS -1025, Aquaron KH-05, KH-10 (product by DAI-ICHI KOGYO SEIYAKU CO,. LTD), Latemul S-180 (product by Kao Corporation), ADEKA REASOAP SE-10N, SE-20N (product by Asahi Denka Co., Ltd.).

(Evaluation of Core-Shell Formation)

It is important to evaluate practical core-shell formation. In the present invention, since the diameter of each particle is markedly small, to such a degree of less than or equal to 200 nm, analytical methods are limited from the viewpoint of resolution. Employed as analytical methods, which achieve the purposes, may be TEM and TOF-SIMS. When fine core-shell particles are observed utilizing TEM, a dispersion is applied onto a film comprised of carbon and subsequently dried, whereby the resultant coating may be observed. When an image observed utilizing the TEM is an image of only an organic material, the image is low in contrast. Therefore, in order to identify core-shell formation, it is desirable to dye the particles employing osmium tetroxide, ruthenium tetroxide, chlorsulfonic acid/uranyl acetate, or silver sulfide. Only core particles are dyed and the resultant particles are observed utilizing said TEM and compared to shell particles. Further, shell particles and non-shell particles are blended and subsequently dyed. It is then confirmed that the ratio of particles having a different degree of dying corresponds to the presence and absence of shell particles.

In a mass spectrometer such as TOF-SIMS, it is confirmed that by forming a shell on the surface of particles, the amount of colorants adjacent to the surface decreases compared to the formation of the core alone. When the colorants do not contain an element which is contained in a core-shell polymer, it is possible to confirm the formation of the shell containing a lesser amount of colorants utilizing the element as a probe.

When no such element is available, it is possible to compare the content of the colorants in the shell to that of particles having no shell, employing a suitable dyeing agent. The core-shell formation can more clearly be observed in such a manner that core-shell particles are buried into an epoxy resin, and an ultra-thin slice is cut employing a microtome, followed by dying the resultant slice. When polymers or colorants comprise an element which is employed as a probe, it is possible to estimate core-shell compositions as well as the amount of the colorants distributed in the core as well as in the shell, employing TOF-SIMS or TEM.

It is important to optimize the recipe and to select a suitable emulsifying method in order to obtain the desired particle diameter of the colored particles in the colored particle aqueous dispersion of the invention. The recipe varies depending on a colorant, a resin or a shell polymer used, but it is preferable that a shell polymer constituting a shell is more hydrophilic than a resin constituting a core because they constitute a suspension in water. The amount of the colorant contained in the shell polymer constituting the shell is preferably less than that in the resin constituting the core, and the colorant is preferable less hydrophilic than a shell polymer constituting a shell. Hydrophilicity and hydrophobicity, for example, can be estimated by using the solubility parameter (SP) described above.

In the present invention, since colorant-containing core-shell colored particles used in a polymer emulsion type water-based ink have a very large surface area per unit volume when the volume average particle diameter is less than 5 nm, the effect of incorporating a colorant in a core-shell polymer is decreased. On the other hand, particles having a particle diameter of over 200 nm tend to clog the printing head, as well as to precipitate in ink, causing the storage stability of the ink to deteriorate.

(Measurement of volume average particle diameter)

A volume average particle diameter can be determined by spherical conversion of a circular equivalent particle diameter obtained from the value of projected areas (for at least 100 particles) in a transmission type electron micrograph (TEM). A volume average particle diameter and its standard deviation are thus determined and a variation coefficient is calculated by dividing the standard deviation by the volume average particle diameter. A variation coefficient can also be determined by use of a dynamic light scattering method. Examples of measuring apparatus are: a laser particle analyzing system manufactured by Otsuka Electronics Co., Ltd.; and Zetasizer 1000HS manufactured by MALVERN Instruments Ltd.

The volume average particle diameter of the colored particle is preferably small for obtaining the colored particle dispersion by which the effects of the invention can be enhanced. When the particle diameter is made smaller so as to be from 5 nm to 100 nm, the value of the volume average diameter tends to be influenced by the presence of a little amount of coarse particle such as that having a diameter of from 60 nm to 100 nm. Therefore, it is preferable to evaluate the size of the particle by the peak particle diameter from the viewpoint of the image quality evaluation.

The peak particle diameter relating to the invention is described below.

When the colored particle dispersion according to the invention is applied to the later-mentioned aqueous ink of the invention, is preferably from 5 nm to 30 nm.

The peak particle diameter of the colored particles is a diameter corresponding to the peak of the volume average particle diameter distribution curve which is obtained by Zetasizer 1000HS manufactured by MALVERN Instruments Ltd.

The peak particle diameter of the colored particles in the colored particle dispersion aqueous ink is from 5 nm to 50 nm. The colored particles preferably satisfy the following ratio condition:

$$\text{(Height at the peak of particle diameter distribution curve)} / \text{(Height at the diameter having 2 times of the peak particle diameter)} \geq 1.5.$$

Fig. 1 shows a schematic view of particle diameter distribution curve of the colored particles of two dispersions in each ink. Dispersion X has a peak at diameter x with height X1, and height X2 at the diameter 2x that is 2 times of x in the particle distribution curve. The ratio of the height is X1/X2, and around 1.7. As for the dispersion Y, the ratio is Y1/Y2. The dispersion Y has broader distribution curve than dispersion X and the ratio is around 1.4.

The ink excellent in the glossiness and the color reproducibility can be obtained by making sharp the particle diameter distribution. The sharp particle diameter distribution can be attained by making the structure of the particle to the core/shell structure or subjecting to the heat treatment at a temperature of not less than 35 °C. For making sharp the particle diameter distribution, the particles distributed in the region of particle diameter larger than the peak diameter are reduced, and the peak diameter is made within the range of from 5 to 50 nm, preferably from 5 to 30 nm. The temperature of the heat treatment is preferably not more than 100 °C.

A variation coefficient of particle diameter is the value of a standard deviation of particle diameter divided by a particle diameter, which means that the larger this value, the wider is the distribution of particle diameters. When the variation coefficient of a volume average particle diameter is at least 80%, the distribution of particle diameter becomes very broad, so that the thickness of a core-shell tends to be non-homogeneous and the physical surface properties tend to vary among particles. The variation of the physical surface properties easily causes coagulation of particles which often results in clogging of ink-jet heads. Further, coagulation of particles easily causes light scattering of the colorant on a medium, resulting in deterioration of image quality. The variation coefficient is preferably not more than 50%.

In the present invention, the content of the polymer used for a shell is preferably 5 to 95 % by weight of the total weight of the polymer and resin. When it is less than 5 % by weight the thickness of a shell is insufficient so that a portion of a core containing a large amount of colorant easily appears on the particles' surface. Further, when the polymer in a shell is excessive, it easily causes reduced ability to protect the colorant in the core. Thus it is more preferably 10 to 90% by weight.

The total content of a colorant such as a dye or a pigment is preferably from 20 to 1,000% by weight of the total weight of the shell polymer and resin used. When the content of colorant is too low compared to the polymer, the image density is insufficiently high after ink-jet recording, while when the content of the colorant is too large, the protection capability of the polymer is insufficient. Solubility parameter of the polymer of core and that of the polymer of shell

In the colored particle having the core/shell structure, it is preferable for improving the miscible state formation that the absolute value |A-B| is not more than $2(MPa)^{1/2}$, more preferably not more than $1 (MPa)^{1/2}$, wherein A is the solubility parameter of the polymer of the core and B is that of the polymer of the shell.

As above-mentioned, further stable particle can be obtained by controlling the absolute value of |A-B| so that the |A-B| value is to be not more than $2(MPa)^{1/2}$ since formation of new particle is prevented on the occasion of the formation of the core/shell particle.

Solubility of resin in ethyl acetate

It is also found that the solubility of not less than 50% by weight of the resin in ethyl acetate at 25 °C is preferable for forming the miscible state of the oil-soluble dye and the resin.

DYE:

Hue of the dye in the present invention is commonly yellow, magenta, cyan, black, blue, green and red, and is preferably yellow, magenta, cyan and black. An oil soluble dye is generally a dye, which does not have a water solubilizing group such as a carboxyl or sulfonyl group, and which is soluble in organic solvents and insoluble in water. The oil soluble dyes also include a water soluble dye made oil-soluble due to its salt formation with a long chain alkyl base. For example, known is a salt formation dye which is a dye salt of an acid dye, a direct dye or a reactive dye with a long chain alkyl amine.

Oil soluble dyes are not limited to those described below. Preferred examples of the oil soluble dyes include the following:

Valifast Yellow 4120, Valifast Yellow 3150, Valifast Yellow 3108, Valifast Yellow 2310N, Valifast Yellow 1101, Valifast Red 3320, Valifast Red 3304, Valifast Red 1306, Valifast Blue 2610, Valifast Blue 2606, Valifast Blue 1603, Oil Yellow GG-S, Oil Yellow 3G, Oil Yellow 129, Oil Yellow 107, Oil Yellow 105, Oil Scarlet 308, Oil Red RR, Oil Red OG, Oil Red 5B, Oil Pink 312, Oil Blue BOS, Oil Blue 613, Oil Blue 2N, Oil Black BY, Oil Black BS, Oil Black 860, Oil Black 5970, Oil Black 5906, and Oil Black 5905, each manufactured by Orient Chemical Industries, Ltd. Kayaset Yellow SF-G, Kayaset Yellow K-CL, Kayaset Yellow GN, Kayaset Yellow A-G, Kayaset Yellow 2G, Kayaset Red SF-4G, Kayaset Red K-BL, Kayaset Red A-BR, Kayaset Magenta 312, and Kayaset Blue K-FL, each manufactured by NIPPON KAYAKU CO., LTD. FS Yellow 1015, FS Magenta 1404, FS Cyan 1522, FS Blue 1504, C.I. Solvent Yellow 88, 83, 82, 79, 56, 29, 19, 16, 14, 04, 03, 02, 01; C.I. Solvent Red 84:1, C.I. Solvent Red 84, 218, 132, 73, 72, 51, 43, 27, 24, 18, 01; C.I. Solvent Blue 70, 67, 44, 40, 35, 11, 02, 01; C.I. Solvent Black 43, 70, 34, 29, 27, 22, 7, 3; C.I. Solvent Violet 3, C.I. Solvent Green 3 and C.I. Solvent Green 5, each manufactured by Arimoto Chemical Co., Ltd.

Further, metal complex dyes such as described in JP-A 9-277693, 10-20559 and 10-30061 are also acceptable. For example, dyes represented by Formula (1) can be employed.

$$\text{Formula (1)} \qquad M\,(\text{Dye})_1\,(A)_m$$

In Formula (1), M represents a metal ion, the term Dye represents a dye capable of forming a coordination bond with a metal ion, and A represents a ligand except for a dye. "1" represents 1, 2 or 3, and "m" represents 0, 1, 2 or 3. When "m" is 0 (zero), "1" represents 2 or 3, and in this case, Dye may be same or different.

The metal ions represented by M are ions of metals selected from the Groups 1 through 8 of the Periodic Table. Example metal ions are; Al, Co, Cr, Cu, Fe, Mn, Mo, Ni, Sn, Ti, Pt, Pd, Zr and Zn. Ions of Ni, CU, Cr, Co, Zn, and Fe are preferable in terms of color tone and various kinds of durability, and Ni ion is specifically preferable.

The dyes capable of forming a coordination bond with a metal ion, represented by the term Dye, include dyes having various dye structures, and preferably are dyes having a coordination group in a structure of a conjugated methine dye, an azo methine dye and an azo dye.

A disperse dye can be used as the oil soluble dye, and disperse dyes are not limited to those described below. Preferred examples of the disperse dyes include dyes such as C.I. Disperse Yellow 5, 42, 54, 64, 79, 82, 83, 93, 99, 100, 119, 122, 124, 126, 160, 184:1, 186, 198, 199, 204, 224 and 237; C.I. Disperse Orange 13, 29, 31:1, 33, 49, 54, 55, 66, 73, 118, 119 and 163; C.I. Disperse Red 54, 60, 72, 73, 86, 88, 91, 92, 93, 111, 126, 127, 134, 135, 143, 145, 152, 153, 154, 159, 164, 167:1, 177, 181, 204, 206, 207, 221, 239, 240, 258, 277, 278, 283, 311, 323, 343, 348, 356 and 362; C.I. Disperse Violet 33; C.I. Disperse Blue 56, 60, 73, 87, 113, 128, 143, 148, 154, 158, 165, 165:1, 165:2, 176, 183, 185, 197, 198, 201, 214, 224, 225, 257, 266, 267, 287, 354, 358, 365 and 368; and C.I. Disperse Green 6:1 and 9.

Other preferred oil soluble dyes include cyclic methylene compounds of phenols, naphthols, pyrazolones, or pyrazolotriazoles, azomethine dyes which can be obtained by oxidation coupling so-called couplers such as open chain methylene compounds with amino compounds such as p-phenylene diamines or p-diaminopyridines, and indoaniline dyes. Azomethine dyes having a pyrazolotriazole ring are especially preferable as a magenta dye.

The content of the resin contained in the colored particles or the content of the polymer contained in preferably the core-shell type colored particles of the invention is preferably 0.5 to 50% by weight, and more preferably 0.5 to 30% by weight based on the water-based ink. When the above content of the polymer in the water-based ink is less than 0.5 % by weight, the function to protect a colorant is insufficient, on the other hand, when the above content is over 50% by weight, storage stability of the dispersion as ink may decrease or clogging of the printer head may occur due to ink viscosity increase or coagulation of the dispersion accompanied with ink solvent evaporation at the top portion of a nozzle. Therefore the above range of that content is preferred.

The content of the dye in the ink is preferably from 1 to 30% by weight, and more preferably from 1.5 to 25 % by weight. When the content of the colorant is less than 1 % by weight, print density is insufficient. When it is over 30% by weight, aging stability of the ink may be reduced due to increase of the particle diameter caused by, for example, coagulation. Therefore, that content falling within the above range is preferred. Difference of solubility parameter between dyes

In the invention, the colored particle dispersion may be used, in which two or more kinds of dye are contained with together. In such the case, two or more kinds of the dye different from each other may be selected from the following colorants. It is particularly preferred to select two or more kinds of the dye so that the difference of the solubility parameter SP between each of the dyes is within 4. 0 $(MPa)^{1/2}$.

Water-based Ink

The water-based ink according to the invention is described.

The water-based ink of the present invention, utilizing water as a medium, comprises dispersed colored particles containing the above colorant, and various kinds of additives may be optionally added to the ink. Examples of the additives include a wetting agent such as polyhydric alcohols, a dispersant, an inorganic salt, a surfactant, an antiseptic agent, an antifungal agent, a pH adjusting agent, an antifoaming agent of a silicone type, a chelating agent such as EDTA, and an oxygen absorbing agent such as a sulfite.

Examples of the above wetting agent include polyhydric alcohols such as ethylene glycol, propylene glycol, diethylene glycol, triethylene glycol, tetraethylene glycol, polyethylene glycol, glycerin, diethylene glycol diethylether, diethylene glycol mono-n-butylether, ethylene glycol monomethyl ether, ethylene glycol monoethyl ether, ethylene glycol monobutyl ether, methylcarbitol, ethylcarbitol, butylcarbitol, ethylcarbitol acetate, diethylcarbitol, triethylene glycol mono methylether, triethylene glycol monoethyl ether and propylene glycol monomethyl ether; ethers thereof; acetate series; nitrogen-containing compounds such as N-mehtyl-2-pyrolidone, 1,3-dimethylimidazolidinone, triethanolamine, formamide and dimethylformamide; and dimethylsulfoxide. These can be used alone or in combination of two or more kinds. These wetting agents are not specifically limited with respect to the addition amount. The wetting agents can be preferably added to the water-based ink in an amount of preferably from 0.1 to 50% by weight, and more preferably 0.1 to 30% by weight, based on the water-based ink.

In order to maintain ink viscosity stability and improve color reproducibility, inorganic salts may be added to the ink. Examples of the inorganic salts include sodium chloride, sodium sulfate, magnesium chloride, and magnesium sulfide.

A dispersant or an emulsifying agent is not specifically limited, however, the HLB value thereof is preferably from 8 to 18 in obtaining the dispersing or emulsifying effect or in obtaining the effect to control the increase of particle diameter in a suspension.

(SURFACTANT)

As the surfactant, any of a cationic surfactant, an anionic surfactant, an amphoteric surfactant and a non-ionic surfactant can be used.

The emulsifying agent or dispersant is preferably an anionic surfactant or a polymeric surfactant.

A surfactant for adjusting a surface tension of the ink is preferably a non-ionic surfactant.

Examples of the cationic surfactant include aliphatic amine salts, aliphatic quaternary ammonium salts, benzalkonium chlorides, benzethonium chloride, pyridinium salts, and imidazolinium salts.

Examples of the anionic surfactant include fatty acid salts, N-acyl-N-methylglycine salt, N-acyl-N-methyl-β-alanine salt, N-acylglutamic acid salt, alkylether carboxylic acid salts, acylated peptides, alkylsulfonic acid salts, alkylbenzene sulfonic acid salts, alkylnaphthalene sulfonic acid salts, dialkylsulfosucccinic acid ester salts, alkylsulfoacetic acid salts, α-olefinesulfonic acid salts, N-acylmethyltaurine, sulfonated oil, higher alcohol sulfuric acid esters, salts of esters of higher alcohol with sulfuric acid, salts of esters of secondary higher alcohol with sulfuric acid, alkylethersulfates, secondary higher alcohol ethoxysulfates, polyoxyethylenealkyl phenyl ether sulfates, fatty acid alkylolamide sulfates, alkyletherphosphates, alkylphosphates.

Examples of the amphoteric surfactant include betaines having an anion from a carboxyl group or a sulfo group, amino carboxylic acid salts, and imidazolinium betaines.

Examples of the nonionic surfactant include polyoxyethylene alkyl ether, polyoxyethylene secondary alkyl ether, polyoxyethylene alkylphenyl ether (for example, Emulgen 911), polyoxyethylene sterol ether, polyoxyethylene lanoline derivatives, polyoxyethylenepolyoxypropylene alkyl ether (for example, New Pole PE-62), polyoxyethylene glyceride, polyoxyethylene castor oil, hardened castor oil, polyoxyethylene sorbitan fatty acid ester, polyoxyethylene sorbitol fatty acid ester, polyoxyethylene glycol fatty acid ester, monoglycerides, polyglycerides, sorbitan fatty acid ester, propylene glycol fatty acid ester, sucrose fatty acid ester, fatty acid alkanol amide, polyoxyethylene fatty acid amide, polyoxyethylene alkylamine, alkylamine oxides, acetylene glycol, and acetylene alcohol.

Other surfactants include, for example, Dispersant SNB, MS, N, SSL, ST and P (names of the products) manufactured by Kao Corp.

These surfactants may be used singly or as an admixture of two or more kinds thereof. The surfactant is contained in the ink in an amount of from 0.001 to 1.0% by weight based on the total weight of the ink, whereby the surface tension of the ink can be controlled. However, the present invention is not necessarily limited thereto. In order to obtain storage stability of ink for a long term, an antiseptic agent or an antifungal agent may be added to the ink.

As the polymeric surfactant, a water soluble resin described below can be used in providing high ink jetting stability. Preferred examples of the polymeric surfactant include styrene-acrylic acid-alkyl acrylate copolymers, styrene-acrylic acid copolymers, styrene-maleic acid-alkyl acrylate copolymers, styrene-maleic acid copolymers, styrene-methacrylic acid-alkyl acrylate copolymers, styrene-methacrylic acid copolymers, styrene-maleic acid monoester copolymers, vinylnaphthalene-acrylic acid copolymers, and vinylnaphthalene-maleic acid copolymers. Other polymeric surfactants include JONCRYL (manufactured by Johnson Polymer Co.), which is an acryl-styrene type resin. These polymer surfactants may be used as an admixture of two or more kinds thereof.

The content of the polymeric surfactant in the ink is preferably from 0.01 to 10% by weight, and more preferably from 0.3 to 5 % by weight, based on the total weight of the ink. When the content of the surfactant is less than 0.01 % by weight, it is difficult to achieve small particle diameter suspension, and when it is over 10% by weight, the particle diameter of the suspension may increase stability of the suspension may be lowered, or gelation of the suspension may be caused.

Examples of the antiseptic agent or antifungal agent include halogenated aromatic compounds for example, Preventol CMK, or chloromethylphenol), methylene dithiocyanate, compounds containing halogen, nitrogen, and sulfur, and 1,2-benzisothiazoline-3-on (for example, PROXEL GXL), but the present invention is not limited thereto.

In order to maintain stability of the ink, the PH adjusting agent may be added to the ink. Examples of the PH adjusting agent include hydrochloric acid, acetic acid, citric acid, sodium hydroxide, and potassium hydroxide. These compounds may be used as they are or as an aqueous solution in which they are dissolved in water.

Further, as the antifoaming agent, there is no specific limitation and numerous commercially available products are acceptable. Such commercially available products include, for example, KF 96, 66, 69, KS 68, 604, 607A, 602, 603, KM73, 73A, 73E, 72, 72A, 72C, 72F, 82F, 70, 71, 75, 80, 83A, 85, 89, 90, 68-1F and 68-2F (names of the products) manufactured by Shin-Etsu Silicone Co., Ltd. The blending content of the antifoaming agent is not specifically limited, however, is preferably from 0.001 to 2% by weight based on the water-based ink of the invention. When the content of the antifoaming agent is less than 0.001 % by weight, it easily causes foaming at the time of ink preparation, and it is difficult to eliminate small bubbles in the ink, while when it is over 2% by weight, although foaming may be restrained, print quality may be deteriorated by generation of repellency spots or non uniform printing. Therefore, the range as described above is preferred.

Next, an emulsifying method used for manufacturing the ink of the present invention will be explained. Employing various emulsifying methods, colored particles as cores containing a colorant and a resin are prepared or core/shell colored particles are prepared directly from pigment particles and a polymer, and the water-based ink of the invention can be prepared employing the resulting colored particles. Examples of the emulsifying method are summarized, for example, on p.86 of "Progress and Application of Functional Emulsifiers and Emulsifying Techniques" published by C.M.C. Co. Ltd. In the present invention, an emulsifying dispersion apparatus, utilizing ultrasonic waves, high speed rotational shear or high pressure, is especially preferably used for preparing colored core particles.

In emulsifying dispersion by means of ultrasonic waves, used can be two types, a so-called a batch type and a continuous type. A batch type is suitable for preparation of a relatively small amount of samples and a continuous type for preparation of a large amount of samples. In a continuous type, for example, an apparatus such as UH-600SR (produced by S.M.T. Co., Ltd.) can be used. In such a continuous type, the application time of ultrasonic waves can be determined by (volume of dispersion room)/(flow speed x circulation number). When plural ultrasonic wave application apparatuses are present, it can be determined by totalizing each application time. The application time is practically not longer than 10,000 seconds. When more than 10,000 seconds of the application time are required, load on the process is too great and emulsifying dispersion time has to be practically shortened, for example, by reselecting emulsifiers used. For this reason, more than 10,000 seconds is not necessary. The application time is preferably between 10 to 2,000 seconds.

As an emulsifying dispersion apparatus employing high speed rotational shear, dispermixers such as described on pages 255 and 256, homomixers such as described on page 251 and ultra-mixers such as described on page 256, of "Progress and Application of Functional Emulsifiers and Emulsifying Techniques" published by C.M.C. Publishing Co., Ltd., can be used. These types of apparatuses can be selectively employed depending on the viscosity of the solution at emulsifying dispersion. In the emulsifying dispersion apparatuses employing high speed rotational shear, the rotational number of stirring blades is important. In the case of an apparatus having a stator, since the clearance between the stirring blade and the stator is generally approximately 0.5 mm and can not be made much less, the shear stress is mainly dependent on the circumferential speed of the stirring blade. Those having a circumferential speed of 5 to 150 m/sec can be applicable to emulsifying dispersion in the present invention. When the circumferential speed is too slow, the particle diameter often cannot be made sufficiently small even with prolonged emulsification time, while the motor power has to be extremely strengthened to achieve 150 m/sec. Preferable is a range of 20 to 100 m/sec.

In emulsifying dispersion by means of high pressure, an apparatus such as LAB2000 (produced by S.M.T. Co., Ltd.) can be used, and the emulsifying dispersion ability is dependent on the pressure applied to the sample. The pressure is preferably in the range of $10^4$ kPa to $5 \times 10^5$ kPa. Further, the desired particle diameter can be obtained, if necessary, by repeating emulsifying dispersion a few times. When the pressure is too low, the desired particle diameter often cannot be obtained, while it is not practical to increase the pressure to $5 \times 10^5$ kPa because of excess load on the apparatus. More preferable is a range of $5 \times 10^4$ kPa to $2 \times 10^5$ kPa.

These emulsifying dispersion apparatus can be utilized alone, as well as in combinations if necessary. A colloidal mill or a flow-jet mixer alone cannot achieve the object of the present invention, however, the combination with an apparatus of the present invention can enhance the effect of the present invention by enabling emulsifying dispersion over a short of time.

In an image formation by discharge of a water-based ink for ink-jet recording of the present invention, used may be an on-demand method or a continuous method ink-jet head. Further, for a discharge method, employed may be any of following methods such as an electromechanical transducing method (e.g., single cavity type, double cavity type, bender type, piston type, share mode type, and shared wall type), an electrothermal transducing method (e.g., thermal ink-jet type and bubble jet type).

The water-based ink according to the invention is employed suitably for an ink jet ink.

(Image Forming Method)

The image forming method according to the invention is described.

An image forming method employing a water-based ink as the ink jet ink (which is referred as an ink jet recording water-based ink) is suitable for the image forming method according to the invention.

An ink-jet recording image can be obtained by such a way as ejecting droplets of the ink through the ink jet head of a printer fed with the ink jet recording water-based ink, based on digital signals, and adhering the ejected ink onto an ink jet receiving medium.

Examples of the ink jet receiving medium that can be used are; any plain paper, coated paper, cast coated paper, glossy paper, glossy film, and OHP film. Among these, a recording medium that forms a porous layer, a so-called void layer, is preferable. The medium is not specifically limited to the above materials or a shape, and for example, a medium having a three-dimensional structure may be used as well as those formed as a sheet.

The water-based ink of the invention can be utilized, for example, as an ink for general writing instruments such as fountain pens, ball-point pens, felt pens, other than as an ink for ink-jet recording. The colored particle aqueous dispersion of the invention can be dried to obtain powder particles, and the powder particles can be used as a toner for electrophotography.

## EXAMPLES

The invention is described bellow referring examples.

Example 1

<Synthesis of resin>

The resin was synthesized by the followings.

Synthesis of Resins P-1 through P-10: Resin according to the invention

A dropping device, a thermometer, a nitrogen gas introducing device, a stirring device and a reflux cooler were attached onto a 3 liter flask having four mouths, and 1,000 g of ethyl acetate was heated and refluxed. Besides, a monomer mixture composed of 1,000 g in total of the monomers in a ratio shown in Table 1 and 1 g of N,N'-azo-bis-isovaleronitrile was prepared. The monomer mixture was dropped into the flask spending 2 hours and reacted for 5 hours at 75 °C. Then the solvent was removed by evaporation under reduced pressure. Thus Resins P-1 through P-10 described in Table 1 were each obtained

Synthesis of Resins RP-1 through RP-9: Comparative Resin

A dropping device, a thermometer, a nitrogen gas introducing device, a stirring device and a reflux cooler were attached onto a 3 liter flask having four mouths; and 1,000 g of ethyl acetate was heated and refluxed. Besides, a monomer mixture composed of 1,000 g in total of the monomers in a ratio shown in Table 2 and 1 g of N,N'-azo-bis-isovaleronitrile was prepared. The monomer mixture was dropped into the flask spending 2 hours, and reacted for 5 hours at 75 °C. Then the solvent was removed by evaporation under reduced pressure. Thus comparative resins described in Table 2 were each obtained.

<Evaluation of solubility of resin in ethyl acetate>

The solubility of each of the resins P-1 through P-10 according to the invention and the comparative resins RP-1 through RP-4 was evaluated and classified into two ranks according to the following norm. The results of the evaluation are shown in Tables 1 and 2.

A: The solubility was not less than 50% by weight.
B: The solubility was less than 50%.

Table 1

| Resin No. | Monomer ratio (% by weight) | Weight average molecular weight | SP value (MPa)$^{1/2}$ | Solubility acetate |
|---|---|---|---|---|
| P-1 | ST/SMA/GFA=50/20/30 | 10000 | 18.4 | A |
| P-2 | ST/EHA/GFA=30/30/40 | 10000 | 18.6 | A |
| P-3 | MMA/SMA/AAEM=50/20/30 | 7000 | 18.1 | A |
| P-4 | MMA/BA/EHA=80/10/10 | 10000 | 17.9 | A |
| P-5 | MMA/EHA=80/20 | 4000 | 17.8 | A |
| P-6 | ST/BA/GFA=40/20/40 | 10000 | 18.8 | A |
| P-7 | ST/SMA/GFA=30/20/50 | 10000 | 19 | A |
| P-8 | ST/EHA/HEMA=50/30/20 | 50000 | 17.8 | A |
| P-9 | MMA/EHA=90/10 | 10000 | 17.9 | A |
| P-10 | ST/BA/VAc=30/40/30 | 10000 | 18.5 | A |

Table 2

| Resin No. | Monomer ratio (% by weight) | Weight average molecular weight | SP value (Mpa)$^{1/2}$ | Solubility in ethyl acetate |
|---|---|---|---|---|
| RP-1 | ST/HEMA/AA=40/40/20 | 20000 | 20.5 | B |
| RP-2 | MMA/SMA=30/70 | 75000 | 17.7 | A |
| RP-3 | ST | 51000 | 18 | B |
| RP-4 | MMA | 55000 | 18.0 | B |

In Tables 1 and 2, the abbreviations showing the monomer are as follows.

ST: Styrene
MMA: Methyl methacrylate
SMA: Stearyl methacrylate
EHA: 2-ethylhexyl acrylate
BA: Butyl acrylate
AAEM: 2-acetoacetoxyethyl methacrylate, produced by Nihon Gousei Kagaku Co., Ltd.
GFA: Monomer of reaction product of glycidyl methacrylate and soy bean oil aliphatic acid, (Bremmer G-FA produced by NOF Corporation)
HEMA: 2-hydroxyethyl methacrylate
VAc: Vinyl acetate
MMA: Methacrylic acid

AA:     Acrylic acid

<Preparation of colored particle dispersion>

The colored particle dispersion was prepared as follows.

Preparation of colored particle dispersion CP-6

Step 1: Preparation of colorant-containing polymer A: Core polymer

In the pot of a mixing apparatus Clearmix CLM-08S, manufactured by M Technique Co., Ltd., 12 g of dye FSB 1504 and 12 g of Resin P-3 and 120 g of ethyl acetate were charged and stirred so as to completely dissolve the resin and the dye.

Then 270 g of an aqueous solution containing 3 g of sodium laurylsulfate SDS as a surfactant was added. The mixture was emulsified for 5 minutes at a stirring speed of 20,000 rpm. Thereafter, ethyl acetate was removed by evaporation under reduced pressure. Thus colorant-containing polymer A was prepared. Step 2: Preparation of shell polymer

Air in the separable flask containing the colorant-containing polymer A was replaced by nitrogen gas and the contents of the flask was heated by 80 °C by a heater. Besides, a mixture liquid composed of 4.5 g of styrene, 1.5 g of 2-hydroxyethyl methacrylate and 0.3 g of N,N'-azo-bis-isovaleronitrile was prepared for formation of the shell polymer. Then the mixture liquid was dropped into the flask spending 1 hour and reacted for 6 hours. Thus colored particle dispersion CP-6 having the core/shell structure was obtained.

Preparation of colored particle dispersions CP-2 through CP-4 and CP-7 through CP-12

Colored particle dispersions CP-2 through CP-4 and CP-7 through CP-12 each having the core/shell structure were prepared in the same manner as in colored particle dispersion CP-1 except that the kind of dye in a using amount of 12 g, kind of resin in a using amount of 12 g, the kind of surfactant, the composition of the shell monomer in the total amount of 6g and the initiator in a using amount of 0.3 g were changed as shown in Table 3.

Preparation of colored particle dispersions CP-1 and CP-5

Colored particle dispersions CP-1 was prepared in the same manner as in colored particle dispersion CP-2 except that the preparation of shell polymer step was omitted.

Colored particle dispersions CP-5 was prepared in the same manner as in colored particle dispersion CP-6 except that the preparation of shell polymer step was omitted. Preparation of colored particle dispersions CP-14 through CP-20: Comparative example

Core/shell type comparative colored particle dispersions 14 through CP-20 were prepared in the same manner as in colored particle dispersion CP-6 except that the dye, resin, surfactant, shell polymer composition and the initiator were changed as shown in Table 3.

Preparation of colored particle dispersions CP-13

Colored particle dispersions CP-13 was prepared in the same manner as in colored particle dispersion CP-14 except that the preparation of shell polymer step was omitted.

The peak particle diameter of thus obtained colored particle was calculated based on the volume average particle diameter distribution measured by Zetasizer 1000HS manufactured by Malvern Co., Ltd. It was confirmed that the data determined by the transmission electron microscopic observation coincided with the foregoing peak particle diameter value.

The composition and the physical data of the colored particle dispersions CP-1 through CP-20 are shown in Table 3.

Table 3 (1)

| Colored particle | Dye | Color | Resin | | Surfactant | |
|---|---|---|---|---|---|---|
| | | | Species | M.W. | Species | Amount |
| CP-1 | *1 | Y | P-1 | 10,000 | SDS | 3g |
| CP-2 | *1 | Y | P-1 | 10,000 | SDS | 3g |
| CP-3 | *1 | Y | P-9 | 10,000 | SDS | 3g |
| CP-4 | *1 | Y | P-9 | 10,000 | SDS | 3g |
| CP-5 | FSB1504 | C | P-3 | 7,000 | SDS | 3g |
| CP-6 | FSB1504 | C | P-3 | 7,000 | SDS | 3g |
| CP-7 | FSB1504 | C | P-4 | 10,000 | SDS | 3g |
| CP-8 | FSB1504 | C | P-4 | 10,000 | KH-10 SDS | 3g 0.3g |
| CP-9 | PR8375/MRG =1/1 | M | P-5 | 4,000 | KH-10 SDS | 3g 0.3g |
| CP-10 | OB860 | Bk | P-5 | 4,000 | KH-10 SDS | 3g 0.3g |
| CP-11 | OB860 | Bk | P-7 | 10,000 | SDS | 3g |
| CP-12 | OB5906 | Bk | P-10 | 10,000 | SDS | 3g |
| CP-13 | *1 | Y | RP-1 | 20,000 | SDS | 3g |
| CP-14 | *1 | Y | RP-2 | 75,000 | SDS | 3g |
| CP-15 | *1 | Y | RP-4 | 55,000 | SDS | 3g |
| CP-16 | FSB1504 | C | RP-3 | 51,000 | SDS | 3g |
| CP-17 | FSB1504 | C | RP-2 | 75,000 | SDS | 3g |
| CP-18 | FSB1504 | C | RP-2 | 75,000 | SDS | 3g |
| CP-19 | PR8375/MRG =1/1 | M | RP-2 | 75,000 | SDS | 3g |
| CP-20 | OB860 | Bk | RP-2 | 75,000 | SDS | 3g |

*1; FSY1015/DY352=1/1

Table 3 (2)

| Colored particle | Shell monomer composition | Init-iator | SP of core | Solu-bility * | \|A-B\| | Peak particle diameter | Re-marks |
|---|---|---|---|---|---|---|---|
| CP-1 | Without shell | - | 18.4 | A | - | 30nm | Inv. |
| CP-2 | ST/HEMA=70/30 | KPS | 18.4 | A | 0.3 | 30nm | Inv. |
| CP-3 | ST/HEMA=70/30 | KPS | 17.9 | A | 0.8 | 25nm | Inv. |
| CP-4 | ST/HEMA/MAA=65/30/5 | KPS | 17.9 | A | 0.9 | 25nm | Inv. |
| CP-5 | Without shell | - | 18.1 | A | - | 20nm | Inv. |
| CP-6 | ST/HEMA=70/30 | AIVN | 18.1 | A | 0.6 | 20nm | Inv. |
| CP-7 | ST/HEMA=70/30 | AIVN | 17.9 | A | 0.8 | 25nm | Inv. |
| CP-8 | ST/HEMA=70/30 | AIVN | 17.9 | A | 0.8 | 25nm | Inv. |
| CP-9 | ST/HEMA=70/30 | KPS | 17.8 | A | 0.9 | 30nm | Inv. |
| CP-10 | ST/HEMA=70/30 | KPS | 17.8 | A | 0.9 | 40nm | Inv. |
| CP-11 | ST/MA/AA=45/35/20 | KPS | 19.0 | A | 1.0 | 40nm | Inv. |
| CP-12 | ST/HEMA/AA=65/30/20 | AIVN | 18.5 | A | 1.7 | 30nm | Inv. |
| CP-13 | Without shell | KPS | 20.5 | B | - | 210nm | Comp. |
| CP-14 | ST/HEMA=70/30 | AIVN | 17.7 | A | 0.3 | 85nm | Comp. |
| CP-15 | ST=100 | AIVN | 18.0 | B | 1.1 | 145nm | Comp. |
| CP-16 | Without shell | - | 18.0 | B | - | 185nm | Comp. |
| CP-17 | ST/HEMA=70/30 | AIVN | 17.7 | A | 1.0 | 80nm | Comp. |
| CP-18 | ST/HEMA/AA=65/30/20 | AIVN | 17.7 | A | 2.2 | 150nm | Comp. |
| CP-19 | ST/HEMA=70/30 | AIVN | 17.7 | A | 0.7 | 90nm | Comp. |
| CP-20 | ST/HEMA=70/30 | AIVN | 17.7 | A | 1.0 | 80nm | Comp. |

Solubility*; Solubility of the core polymer in ethyl acetate

|A-B|: Difference of the solubility parameter of the core polymer and that of the shell polymer Molecular weight; Weight average molecular weight

Y; Yellow   M; Magenta   C; Cyan   Bk; Black

Inv.; Inventive   Comp.; Comparative

SDS: Sodium laurylsulfate

KH-10: Aquaron KH-10 produced by Daiichi Kogyo Seiyaku Co., Ltd.

MLAA: Maleic acid

AIVN: N,N'-azo-bis-isovaleronitrile

KPS: Potassium persulfate

The dyes described in Table 3 are as follows.

FSY1015: FS Yellow 1015, Arimoto Chemical Co., Ltd.

DY352: Plast Yellow DY-352, Arimoto Chemical Co., Ltd.

PR8375: Plast Red 8375, Arimoto Chemical Co., Ltd.

MRG: MS Red G, Mitsui Chemicals.

FSB1504: FS Blue 1504, Arimoto Chemical Co., Ltd.

OB860: Oil Black 960, Orient Chemical Industries, Ltd.

OB5906: Oil Black 5906, Arimoto Chemical Co., Ltd.

<Preparation of ink-jet inks I-1 through I-20>

Each of the above-obtained colored particle dispersions was weighed to the amount shown in Table 4, and the solvent, surfactant and 1.0% of preservative Proxel GX and the remaining part of water were mixed so to prepare 100 g of each of the inks I-1 through 1-20. Thus obtained inks I-1 through I-20 were each filtered by a membrane filter with pore size of 0.8 $\mu$m for removing dusts and coarse particles. Thus aqueous inks I-1 through I-20 for ink-jet printing were obtained.

Table 4

| Ink No. | Color | Colored particle | Amount | Solvent of ink | Surfactant | Peak particle diameter | Remarks |
|---|---|---|---|---|---|---|---|
| I-1 | Y | CP-1 | 50g | EG 15%, Gly 20% | E1010 0.5% | 30nm | Inv. |
| I-2 | Y | CP-2 | 50g | EG 15%, Gly 20% | E1010 0.5% | 30nm | Inv. |
| I-3 | Y | CP-3 | 50g | EG 15%, Gly 20% | E1010 0.5% | 25nm | Inv. |
| 1-4 | Y | CP-4 | 50g | EG 15%, Gly 20% | E1010 0.5% | 25nm | Inv. |
| I-5 | C | CP-5 | 60g | EG 15%, Gly 20% | E1010 0.5% | 20nm | Inv. |
| I-6 | C | CP-6 | 60g | EG 15%, Gly 20% | E1010 0.5% | 20nm | Inv. |
| I-7 | C | CP-7 | 60g | EG 15%, Gly 20% | E1010 0.5% | 25nm | Inv. |
| I-8 | C | CP-8 | 60g | EG 15%, Gly 20% | E1010 0.5% | 25nm | Inv. |
| I-9 | M | CP-9 | 55g | EG 15%, Gly 20% | E1010 0.5% | 30nm | Inv. |
| I-10 | Bk | CP-10 | 60g | EG 15%, Gly 20% | E1010 0.5% | 40nm | Inv. |
| I-11 | Bk | CP-11 | 60g | EG 15%, Gly 20% | E1010 0.5% | 40nm | Inv. |
| I-12 | Bk | CP-12 | 60g | EG 15%, Gly 20% | E1010 0.5% | 30nm | Inv. |
| I-13 | Y | CP-13 | 50g | EG 15%, Gly 20% | E1010 0.5% | 210nm | Comp. |
| I-14 | Y | CP-14 | 50g | EG 15%, Gly 20% | E1010 0.5% | 85nm | Comp. |
| I-15 | Y | CP-15 | 50g | EG 15%, Gly 20% | E1010 0.5% | 145nm | Comp. |
| I-16 | C | CP-16 | 60g | EG 15%, Gly 20% | E1010 0.5% | 185nm | Comp. |
| I-17 | C | CP-17 | 60g | EG 15%, Gly 20% | E1010 0.5% | 80nm | Comp. |
| I-18 | C | CP-18 | 60g | EG 15%, Gly 20% | E1010 0.5% | 150nm | Comp. |
| I-19 | M | CP-19 | 55g | EG 15%, Gly 20% | E1010 0.5% | 90nm | Comp. |

(continued)

| Ink No. | Color | Colored particle | Amount | Solvent of ink | Surfactant | Peak particle diameter | Remarks |
|---------|-------|------------------|--------|----------------|------------|------------------------|---------|
| I-20 | Bk | CP-20 | 60g | EG 15%, Gly 20% | E1010 0.5% | 80nm | Comp. |

Inv.; Inventive Comp.; Comparative
EG: Ethylene glycol
Gly: Glycerol
E1010: Olfin E1010, Nisshin Kagaku Co., Ltd.

<Property evaluation method>

The obtained inks I-1 through I-20 were each store under a forced aging condition at 60 °C for 168 hours, and a variation ratio of particle diameter and a filtering ability of each of the inks was measured for evaluating the dispersion stability of the colored particle dispersion and the storage ability of the ink containing the dispersion. Thus obtained results are shown in Table 5.

<Variation ratio of particle diameter>

Each of the inks was stored at 60 °C for 168 hours and the average particle diameter was measured before and after the storage. The variation ratio of particle diameter was defined as follows:

(Average diameter after the heated storage/ Average diameter before the heated storage) x 100 (%).

<Filtering ability>

After storage at 60 °C for 168 hours, 5 ml of ink was sampled from each of the inks and filtered by a cellulose acetate membrane filter having a pore size of 0.8 $\mu$m. The samples were classified into the following ranks:

A: The whole amount of the sample could be filtered.
B: A half or more amount of the sample could be filtered; acceptable level.
C: Only an amount less than half of the sample could be filtered; unacceptable level.

Each of the ink-jet inks I-1 through 1-20 was charged into a color ink cartridge, manufactured by Epson Co., Ltd., and an wedge-shaped image sample having 10 steps of from 0% to 100% was printed out on ink-jet glossy paper Photolike QP, manufactured by Konica Corporation, by an ink-jet printer CL-750, manufactured by Epson Co., Ltd., using the ink cartridge containing the ink sample. The printing was carried out on the status of that the printing driver was off. The stability of the ink ejection and the maximum density and the light fastness of the printed image were evaluated as follows.

<Evaluation of ejection stability>

Ten wedge chart images each having a size of 1 cm x 10 cm were printed on A4 size paper by the foregoing ink-jet printer so that the chart images were not overlapped with each other. The printing was continuously performed for 10 times. The images printed on the paper sheets were visually observed and classified into the following ranks.

A: Any changing was not observed on the situation of the ink ejection; good.
B: Slanting ejection of the ink was observed but lacking of the ink was not observed; acceptable for practical use.
C: About 10% of ink lacking was observed.
D: About several dozens of ink lacking was observed.

In the invention, the quality level ranked into A and B were acceptable for practical use.

<Evaluation of the maximum density>

The color density of each color was measured by X-Rite 900 manufactured by Nihon Heihan Kizai Co., Ltd.

<Light fastness>

The test was carried out by the use of a low temperature Xe weather meter XL75, manufactured by Suga Test Machine Co., Ltd., with a luminance of 70,000 lx. The remaining ratio of the reflective density was determined by measuring the density variation at a printed image density of about 1 by X-Rite 900 manufactured by Nihon Heihan Kizai Co., Ltd. Regarding the sample in which the density was insufficient, the density variation was measured at the maximum density. The level of the light fastness was classified into the following ranks.

A: The remaining ratio of the reflective density was not less than 85%.

B: The remaining ratio of the reflective density was from 70% to less than 85%.

C: The remaining ratio of the reflective density was from 50% to less than 70%.

D: The remaining ratio of the reflective density was less than 50%.

In the invention, the light fastness classified into ranks A and B was acceptable for practical use.
The results thus obtained are shown below.

Table 5

| Ink No. | Color of ink | Molecular weight | SP value | Solubility * | \| a-b\| | Peak particle diameter | *1 | Filtering ability | Ejection stability | *2 | Light fastness | Remarks |
|---------|-------------|------------------|----------|-------------|---------|------------------------|-----|-------------------|-------------------|-----|----------------|---------|
| I-1 | | 10000 | 18. 4 | A | | 30nm | 156 | B | B | 1.6 | B | I nv. |
| I-2 | Y | 10000 | 18.4 | A | 0. 3 | 30nm | 120 | A | A | 1. 7 | B | Inv. |
| I-3 | Y | 10000 | 17. 9 | A | 0.8 | 25nm | 125 | A | A | 1. 7 | B | Inv. |
| I-4 | Y | 4000 | 17. 9 | A | 0. 9 | 25nm | 108 | A | A | 1.7 | B | Inv. |
| I-5 | C | 10000 | 18. 1 | A | | 20nm | 145 | B | B | 1. 8 | B | Inv. |
| I-6 | C | 10000 | 18. 1 | A | 0. 6 | 20nm | 115 | A | A | 2 | A | Inv. |
| I-7 | C | 10000 | 17. 9 | A | 0. 8 | 25nm | 121 | A | A | 1.9 | A | Inv. |
| I-8 | C | 10000 | 17. 9 | A | 0. 8 | 25nm | 101 | A | A | 2 | A | Inv. |
| I-9 | M | 10000 | 17.8 | A | 0. 9 | 30nm | 109 | A | A | 1.9 | A | Inv. |
| I-10 | Bk | 7000 | 17. 8 | A | 0. 9 | 40nm | 113 | A | A | 1.8 | A | Inv. |
| I-11 | Bk | 50000 | 19. 0 | A | 1 | 40nm | 139 | B | B | 1.7 | B | Inv. |
| I-12 | Bk | 10000 | 18. 5 | A | 1. 7 | 30nm | 141 | B | B | 1. 6 | B | Inv. |
| I-13 | Y | 20000 | 20. 5 | B | | 210nm | 470 | C | C | 1.2 | D | Comp. |
| I-14 | Y | 75000 | 17. 7 | A | 0.3 | 85nm | 240 | B | B | 1.4 | C | Comp. |
| I-15 | Y | 10000 | 18. 0 | B | 1.1 | 145nm | 500 | C | C | 1.1 | C | Comp. |
| I-16 | C | 10000 | 18. 0 | B | | 185nm | 890 | C | D | 1.3 | C | Comp. |
| I-17 | C | 75000 | 17. 7 | A | 1 | 80nm | 340 | B | B | 1.7 | B | Comp. |
| I-18 | C | 75000 | 17.7 | A | 2.2 | 150nm | 670 | C | D | 1. 2 | B | Comp. |
| I-19 | M | 75000 | 17. 7 | A | 0. 7 | 90nm | 250 | B | C | 1. 5 | B | Comp. |

(continued)

| Ink No. | Color of ink | Molecular weight | SP value | Solubility * | \| a-b\| | Peak particle diameter | *1 | Filtering ability | Ejection stability | *2 | Light fastness | Remarks |
|---|---|---|---|---|---|---|---|---|---|---|---|---|
| I-20 | Bk | 75000 | 17. 7 | A | 1 | 80nm | 300 | B | C | 1. 4 | C | Comp. |

*1; Variation ratio of particle diameter (%) *2; Maximum density
Solubility*: Solubility of core polymer in ethyl acetate
| A-B| : Difference of the solubility parameter of the core polymer and that of the shell polymer
Molecular weight: Weight average molecular weight
Inv.; Inventive Comp.; Comparative

It is understood from Table 5 that the ink-jet ink prepared by using the colored particle dispersion according to the invention is an ink which is low in the variation ratio of the particle diameter, excellent in the filtering ability at 0.45 μm and superior in the dispersion stability and the storage stability compared with the comparative ink, and the ink according to the invention difficultly causes any trouble such as clocking of the nozzle on the occasion of printing since the ink has excellent physical properties.

It is also cleared that the ink-jet ink according to the invention is excellent in the stability of ejection from the ink-jet nozzle on the occasion of the image formation by the printer as the reflection of the high stability of the dispersion, and gives high maximum density of the printed image and is excellent in the light fastness.

It is considered that such the results are caused by the high miscibility of the colorant and the core polymer, high accomplishment of the covering by the shell polymer and the core/shell structure in the colored particle dispersion according to the invention.

Example 2

<Preparation of ink set IS-1>:

Ink-jet inks I-4Y, 8C, 9M and 10Bk prepared in Example 1 according to the invention were used as high color density inks.

A low density magenta ink I-21 and a low density cyan ink I-22 were each prepared in the same manner as in the high density ink except that 20 g of ethylene glycol and 20 g of glycerin were added so that the concentration of the dye was become to about 1/4 of that in the high density ink. An ink set IS-1 was prepared by combining the six kinds of the ink.

The properties of the low density inks I-21 and I-22 are shown in Table 6.

<Preparation of ink set IS-2>: Comparative example

Ink set IS-2 was prepared in the same manner as in IS-1 except that the high density inks were replaced by I-14Y, 17C, 19M and 20Bk, and the low density inks were replaced by a low density magenta ink I-23 and a low density cyan ink I-24 each described in Table 6.

The inks I-23 and I-24 were each prepared in the manner similar to that in the inks I-21 and I-22.

Table 6

| Ink No. | Color | Colored particle | Solvent of ink | Surfac -tant | peak particle diameter | Remarks |
|---------|-------|------------------|----------------|--------------|------------------------|---------|
| I-21 | Low density M | CP-9 | EG 20%, Gly 20% | E1010 0.5% | 180nm | Inv. |
| I-22 | Low C density C | CP-8 | EG 20%, Gly 20% | E1010 0.5% | 96nm | Inv. |
| I-23 | Low density | CP-19 M | EG 20%, Gly 20% | E1010 0.5% | 80nm | Comp. |
| I-24 | Low density C | CP-17 | EG 20%, Gly 20% | E1010 0.5% | 100nm | Comp. |
| Inv : Inventive Comp.; Comparative | | | | | | |

<Preparation of ink set IS-3>: Comparative example

The original pigment inks attached to ink-jet printer MC-2000, manufactured by Epson Co., Ltd., were used as ink set IS-3.

The foregoing ink sets were each charged in the original ink cartridges and attached to the ink-jet printer MC-2000, manufactured by Epson Co., Ltd., and an image was printed on ink-jet paper Photolike QP, manufactured by Konica Corporation, in a mode of that the printer driver was off. Monochromatic patches with a color density of 80% having a size of 3 cm x 3 cm were used as the printing image. The glossiness of the printed image was evaluated in the following manner.

<Evaluation of glossiness>

The glossiness of the printed image was visually evaluated by 20 observers using a glossiness chart and scored according to the following ranks and the average value of the all colors was calculated.

1: Ten or more observers judged that the sample showed sufficient glossiness even when the image was seen from the front position or a slanting position; good.

2: Ten or more observers judged that the sample showed sufficient glossiness only when the image was seen from the front position; acceptable for practical use.

3: Ten or more observers judged that the sample showed insufficient glossiness.

In the invention, the levels of ranked in A and B are acceptable for practical use.

Thus obtained results are shown in Table 7.

Table 7

| Ink set No. | Kind of ink | Glossiness | Remarks |
|---|---|---|---|
| IS-1 | High color density: I-4,8,9,10<br>Low color density: I-21,22 | 1.75 | Inventive |
| IS-2 | High color density:I-14,17,19,20<br>Low color density: I-23,24 | 2.5 | Comparative |
| IS-3 | Original inks attached with MC2000 | 2.25 | Comparative |

It is cleared from Table 7 that the samples according to the invention shows higher glossiness compared with the comparative examples.

Example 3

A dropping device, a thermometer, a nitrogen gas introducing device, a stirring device and a reflux cooler were attached to a 3 liter flask having four mouths; and 1,000 g of ethyl acetate was heated and refluxed. Besides, a monomer mixture composed of 1,000 g in total of the monomers in a ratio described in Table 8 and 1 g of N,N'-azo-bis-isovaleronitrile AIVN was prepared. The monomer mixture was dropped into the flask spending 2 hours, and reacted for 5 hours at the same temperature. Then the solvent was removed by evaporation under reduced pressure. Thus Resins P-31 through P-34 described in Table 8 were each obtained.

**Table 8**

| Resin No. | Monomer ratio (weight-%) | SP | Solubility in ethyl acetate |
|---|---|---|---|
| P-31 | ST/SMA/GFA=50/20/30 | 18.4 | A |
| P-32 | ST/SMA/AAEM=50/20/30 | 18.2 | A |
| P-33 | ST/SMA/AAEM=40/20/40 | 18.3 | A |
| P-34* | BL-S (butyral produced by Sekisui Chemical Co., Ltd.) | 19.4 | B |
| ST: Styrene<br>SMA: Stearyl methacrylate<br>AAEM: 2-acetoacetoxyethyl methacrylate (Nihon Gousei Kagaku Co., Ltd.)<br>GFA: Monomer of reaction product of glycidyl methacrylate and soy mean oil aliphatic acid Bremmer G-FA (NOF Corporation)<br>* Comparative | | | |

Preparation of colored particle

Into the pot of Clearmix CLM-08S, manufactured by M Technique CO., Ltd., 12 g of dyes of FSB1015/DY352 in a mixing ratio of 1:9, 12 g of resin P-31 and 120 g of ethyl acetate were put and stirred to completely dissolve the dyes. Then 270 g of an aqueous solution containing 3 g of sodium laurylsulfate SDS as a surfactant was added, and the mixture was emulsified for 5 minutes at a stirring speed of 20,000 rpm. Thereafter, ethyl acetate was removed under reduced pressure to obtain the colored particles. The colored particles were transferred into a separable flask with three mouths and air in the flask was replaced by nitrogen gas. Then the contents of the flask were heated by 80 °C by a heater. Into the flask, a mixture of 4.5 g of styrene ST, 1.5 g of 2-hydroxyethyl methacrylate HEMA as the shell monomer composition and 0.3 g of N,N'-azo-bis-isovaleronitrile AIVN as an initiator was dropped spending for 1 hour, and further reacted for 6 hours. Thus core/shell type colored particle Cp-31 described in Table 9 was obtained.

Colored particles CP-32 through CP-34 were prepared in the same manner as in CP-31 except that the 12 g of dye, the surfactant, 6 g in total of the shell monomer composition and 0.3 g of the initiator were changed as shown in Table 9. Comparative preparation example

Comparative colored particles CP-35 through CP-38 each having the peak diameter without the invention were prepared by changing the resin.

Each of thus obtained colored particles was subjected to the heating treatment at 40 °C for 6 hours.

Table 9

| Colored fine particle No. | Dye | Resin | Surfactant and its amount | Shell monomer composition | Initiator | Peak particle diameter | Peak ratio | Peak ratio after heat treatment |
|---|---|---|---|---|---|---|---|---|
| CP-31 (Invention) | FSY1015/DY352=1/9 | P-1 | SDS 3g | ST/HEMA=50/50 | KPS | 30nm | 1. 8 | 2. 5 |
| CP-32 (Invention) | PR8375/MRG=1/1 | P-1 | SDS 3g | ST/HEMA=50/50 | KPS | 40nm | 1. 9 | 2. 4 |
| CP-33 (Invention) | FSB1504 | P-2 | SDS 3g | ST/HEMA=50/50 | AIVN | 20nm | 2. 0 | 3. 5 |
| CP-34 (Invention) | OB860 | P-3 | SDS 3g | ST/HEMA=50/50 | AIVN | 30nm | 1. 7 | 2. 1 |
| CP-35 (Without invention) | FSY1015/DY352=1/9 | P-4 | SDS 3g | ST/HEMA=50/50 | KPS | 80nm | 1. 4 | 1. 5 |
| CP-36 (Without invention) | PR8375/MRG=1/1 | P-4 | SDS 3g | ST/HEMA=50/50 | KPS | 100nm | 1. 3 | 1. 1 |
| CP-37 (Without invention) | FSB1504 | P-4 | SDS 3g | ST/HEMA=50/50 | KPS | 80nm | 1. 6 | 1. 4 |
| CP-38 (Without invention) | OB860 | P-4 | SDS 3g | ST/HEMA=50/50 | KPS | 85nm | 1. 4 | 1. 4 |

The peak diameter, the diameter of two times of the peak diameter and the scattered light intensity of the colored particle were measured before and after the heat treatment by Zetasizer 1000HS manufactured by Malvern Co., Ltd., and the peak ratio, (Percentage of particles each having the peak particle diameter)/(Percentage of particle each having 2 times of the peak particle diameter), was calculated. Typical example of the graph of the colored particle diameter distribution of the inventive sample and that of the sample without invention are shown in Fig 1. Thus measured particle diameter was reconfirmed by a transmission electron microscope TEM.

The abbreviations used in Table 9 are as follows:

SDS: Sodium laurylsulfate
AIVN: N,N'-azo-bis-isovaleronitrile
KPS: Potassium persulfate
HEMA: 2-hydroxyethyl methacrylate
Dye
FSY1015: FS Yellow 1015 (Arimoto Chemical Co., Ltd.)
DY352: Plast Yellow DY-352 (Arimoto Chemical Co., Ltd.)
PR8375: Plast Red 8375 (Arimoto Chemical Co., Ltd.)
MRG: MS Red G (Mitsui Chemicals)
FSB1504: FS Blue 1504 (Arimoto Chemical Co., Ltd.)
OB860: Oil Black 860 (Orient Chemical Industries, Ltd.) Evaluation of ink property

Preparation of ink

Each of the above-obtained colored particles, the solvent and surfactant in the amount described in Table 8 and 1.0% of preservative Proxel GX and the remaining part of water were mixed so to prepare 100 g of each of the inks. Thus obtained inks were each filtered by a membrane filter with pore size of 0.8 $\mu$m for removing dusts and coarse particles. Thus ink-jet inks I-31 through I-42 were obtained. The peak diameter of each of the inks was measured in the foregoing method and the peak ratio was calculated.

The ink was diluted so that the light absorbancy at the maximum absorption wavelength was to be 100, and the light absorbancy at 850 nm of the diluted ink was measured.

Table 10

| Ink No. | Ink color | Colored fine particle | Ink solvent | | Surfactant | | Peak particle diameter | Peak ratio | Light absorbancy at 850 nm** |
|---------|-----------|----------------------|-------------|-----|------------|------|------------------------|-----------|------------------------------|
| I-31 (Invention) | *1 | CP-1 50g | EG<br>Gly | 15%<br>15% | E1010 | 0.4% | 30nm | 2. 5 | 0. 5 |
| I-32 (Invention) | *2 | CP-2 50g | EG<br>Gly | 15%<br>15% | E1010 | 0.4% | 40nm | 2. 4 | 0. 6 |
| I-33 (Invention) | *3 | CP-3 60g | EG<br>Gly | 15%<br>15% | E1010 | 0.4% | 20nm | 3. 5 | 1. 3 |
| 1-34 (Invention) | *4 | CP-4 60g | EG<br>Gly | 15%<br>15% | E1010 | 0.4% | 30nm | 2. 1 | 1. 5 |
| I-35 (Invention) | *5 | CP-2 15g | EG<br>Gly | 20%<br>20% | E1010 | 0.4% | 40nm | 2. 4 | 0.6 |
| I-36 (Invention) | *6 | CP-3 20g | EG<br>Gly | 20%<br>20% | E1010 | 0.4% | 20nm | 3. 5 | 1.3 |
| I-37 (Without invention) | *1 | CP-5 50g | EG<br>Gly | 15%<br>15% | E1010 | 0.4% | 80nm | 1.7 | 2. 8 |
| I-38 (Without invention) | *2 | CP-6 50g | EG<br>Gly | 15%<br>15% | E1010 | 0.4% | 90nm | 1.6 | 3.1 |

(continued)

| Ink No. | Ink color | Colored fine particle | Ink solvent | | Surfactant | | Peak particle diameter | Peak ratio | Light absorbancy at 850 nm** |
|---|---|---|---|---|---|---|---|---|---|
| I-39 (Without invention) | *3 | CP-7 60g | EG | 15% | E1010 | 0.4% | 95nm | 1. 4 | 4.6 |
| | | | Gly | 15% | | | | | |
| 1-40 (Without invention) | *4 | CP-8 60g | EG | 15% | E1010 | 0.4% | 105nm | 1. 4 | 4.3 |
| | | | Gly | 15% | | | | | |
| I-41 (Without invention) | *5 | CP-6 15g | EG | 20% | E1010 | 0.4% | 90nm | 1. 1 | 1. 8 |
| | | | Gly | 20% | | | | | |
| I-42 (Without invention) | *6 | CP-7 20g | EG | 20% | E1010 | 0.4% | 95nm | 1. 4 | 2. 5 |
| | | | Gly | 20% | | | | | |

*1; High density yellow *2; High density magenta *3; High density cyan
*4; High density black *5;Low density magenta *6; Low density cyan
**: Relative light absorbancy at 850 nm when the light absorbancy at the maximum absorption wavelength is set at 100
EG: Ethylene glycol
Gly: Glycerol
E1010: Olfin E1010 (Nisshin Kagaku Co., Ltd.)

In the ink according to the invention, the peak particle diameter is from 5 to 50 nm, the peak ratio is not more than 1.5 and the infrared absorption is inhibited so that the light absorbancy at 850 nm is not more than2.5 when the light absorbancy at the maximum absorption wavelength was set at 100.

<Evaluation by printing>

Inks I-1 through 1-34 and I-37 through I-40 were each charged in the original cartridge of an ink-jet printer CL0-750, manufactured by Epson Co., Ltd., and an wedge-like image in which the image density was from 0% to 100% changed into 10 steps was printed out on ink-jet paper Photolike QP, produced by Konica Corporation, by the printer and the inks. The printer driver was set so that mixed color was not formed.
Besides, monochromatic patches having a size of 3 cm x 3cm were prepared by using each of the high density color inks for evaluating the glossiness of the printed image.
Maximum density: The density of each color was measured by X-Rite 900, manufactured by Nihon Heihan Kizai Co., Ltd.
Color specification: The printed image was measured by X-Rite 900, manufactured by Nihon Heihan Kizai Co., Ltd., and a*, b* and C* were calculated.
Glossiness: The glossiness of the printed image was visually evaluated by 20 observers using a glossiness chart and scored according to the following ranks and the average value of the all colors was calculated.

1: Ten or more observers judged that the sample showed sufficient glossiness even when the image was seen from the front position or a slanting position; good.
2: Ten or more observers judged that the sample showed sufficient glossiness only when the image was seen from the front position; acceptable for practical use.
3: Ten or more observers judged that the sample showed insufficient glossiness.

The results of the measurements are shown in Table 11.

Table 11

| Ink No. | Maximum density | * a | b* | C* | Glossiness |
|---|---|---|---|---|---|
| I-1 (Invention) | 1.6 | -16 | 110 | 111 | 1 |
| I-2 (Invention) | 2.0 | 78 | 10 | 79 | 1 |
| 1-3 (Invention) | 2.0 | -43 | -40 | 59 | 1 |
| I-4 (Invention) | 1.8 | -5 | -10 | 9 | 1 |
| I-7 (Without invention) | 1.5 | -17 | 103 | 104 | 2 |
| I-8 (Without invention) | 1.9 | 73 | 10 | 74 | 2 |
| I-9 (Without invention) | 1.9 | -39 | -37 | 54 | 3 |
| I-10 (Without invention) | 1.6 | -7 | -15 | 17 | 3 |
| $C*= [(a*)^2+(b*)^2]^{1/2}$ | | | | | |

The samples using the inks according to the invention were each show high chromaticness and suitable glossiness.

<Evaluation of image quality>

Each of the ink sets shown in Table 12 were charged in the original cartridge of a pigment ink-jet printer MC-200, manufactured by Epson Co., Ltd., and an image was printed out by the printer to ink-jet paper Photolike PQ, produced by Konica Corporation. The printer driver was set so that mixed color was not formed. Moreover, the image was printed out using the original inks of MC-2000 printer as the comparative pigment ink set. As the image to be printed, monochromatic patches with density of 80% each having a size of 3 cm x 3cm for the glossiness evaluation and a chart for measuring the color reproducible region were used.

Glossiness: The glossiness of the printed image was visually evaluated by 20 observers using a glossiness chart and scored according to the following ranks and the average value of the all colors was calculated.

1: Ten or more observers judged that the sample showed sufficient glossiness even when the image was seen from the front position or a slanting position; good.
2: Ten or more observers judged that the sample showed sufficient glossiness only when the image was seen from the front position; acceptable for practical use.
3: Ten or more observers judged that the sample showed insufficient glossiness.

Color reproducible region: The color reproducible region at the brightness of 50% was calculated as the area and the area was expressed by a relative value when the color reproducible area of the original pigment ink was set at 100.

Table 12

| No. | Ink set | Glossiness | Color reproducible region |
|---|---|---|---|
| IS-31 (Invention) | High density: I-31 to I-34, Low density: I-35 and I-36 | 1.75 | 121 |
| IS-32 (Without invention) | High density: 1-37 to 1-40, Low density: I-41 and I-92 | 2.5 | 93 |

(continued)

| No. | Ink set | Glossiness | Color reproducible region |
|---|---|---|---|
| IS-33 (Original pigment) | MC-2000 original ink | 2.25 | 100 |

As is clear from the results in Table 12, the using the colored particle dispersion according to the invention is excellent in the glossiness and the color reproducible region. Such the results are reflection of the properties of the colored particle that the colored particle is very small and the dispersion is stable.

The colored particle dispersion excellent in the stability of the dispersion as show by the low particle diameter variation ratio, and in the storage stability as show by the high filtering ability; the aqueous ink prepared by the use of the dispersion, the ink for ink-jet printing and the image forming method can be provided by the invention, by which the excellent stability of the ejection and the high maximum density and high light fastness.

The image forming method excellent in the glossiness and color reproducibility can be obtained by the use of the colored particle dispersion ink as the ink-jet printing ink.

**Claims**

1. An ink for Ink jet recording comprising colored particles containing a dye and a resin, the colored particles being dispersed in an aqueous medium, wherein a weight average molecular weight of the resin is from 2,000 to 50.000, a solubility parameter of the resin Is from 16 to 19 $[Mpa]^{1/2}$, and a particle diameter at a peak of particle diameter distribution curve of the colored particles is from 5 to 50 nm.

2. The ink of claim 1, wherein the resin is dissolved in ethyl acetate in a ratio of not less than 50% by weight at 25 °C.

3. The ink of claim 1, wherein the core resin and the shell resin satisfies formula of

$$|A-B| \le 2[MPa]^{1/2}$$

wherein A is a solubility parameter of the shell resin and B is a solubility parameter of the core resin.

4. The Ink of claim 1 or 3. wherein the shell resin comprises a polymer containing a monomer unit having an anionic group or a nonionic group.

5. The ink of claim 1 wherein the colored particles satisfy the following ratio condition:

(Height at the peak of the particle diameter distribution curve)/(Height at the diameter having 2 times of particle diameter at the peak of the particle diameter distribution curve) $\ge$ 1.5.

6. The ink of any of claims 1, 2, 4, and 5, wherein the ink has light absorbance at 850 nm of not more than 2.5 when the ink is diluted so that the light absorbance at the maximum absorbing wavelength is to be 100.

7. The Ink of any of claims 1 to 6, wherein each of the colored particles has a core/shell structure.

8. The ink of any of claims 1 to 7, wherein the colored particles are prepared by forming colored particles dispersion comprising colored particles containing a dye and resin dispersed in aqueous medium, and shelling each particle of the colored particles with resin.

9. The ink of claim 7 wherein the colored particles dispersion is formed by dissolving a resin and dye in an organic solvent, emulsion dispersing the resulting solution or dispersion in water, and then removing the organic solvent.

**10.** The ink of claim 9 wherein the colored particles dispersion is formed by preparing a resin particles dispersion by emulsion polymerization, and adding a dye solution containing a dye dissolved in an organic solvent to the dispersion.

**11.** The ink of claim 8, 9 or 10, wherein shelling is conducted by adding a monomer having a polymerizable double bond to the colored particles, and emulsion polymerizing the monomer so as to adsorb on the colored particles.

**12.** The ink of any of claims 1 to 11, wherein the ink was subjected to a heat treatment at not less than 35 °C in the course of production of the ink.

**13.** The ink of claim 12 wherein the ink was subjected to a heat treatment at not less than 35 °C in the course of production of the colored particles.

**14.** An Image forming method comprising a step of ejecting the ink of any of claims 1 to 13 from an ink-jet head in a droplet state to be adhered onto an ink receiving medium,

**15.** An image forming method of claim 14, wherein the ink receiving medium has a porous ink receiving layer.

**Patentansprüche**

**1.** Eine Tinte für Tintenstrahlaufzeichnungen, die farbige, einen Farbstoff und ein Harz enthaltende Partikel umfasst, die farbigen Partikel in einem wässrigen Medium dispergiert sind, worin die massegemittelte Molekülmasse des Harzes von 2000 bis 50 000 ist, der Löslichkeitsparameter des Harzes von 16 bis 19 $[MPa]^{1/2}$ und der Partikeldurchmesser am Peak der Partikeldurchmesser-Verteilungskurve der farbigen Partikel von 5 bis 50 nm ist.

**2.** Die Tinte von Anspruch 1, worin das Harz in Essigsäureethylester in einem Verhältnis nicht kleiner als 50 Gewichts% bei 25°C gelöst ist.

**3.** Die Tinte von Anspruch 1, worin das Kernharz und das Hülleharz der Formel

$$\left| A\text{-}B \right| \leq 2[MPa]^{1/2}$$

genügen, worin A der Löslichkeitsparameter des Hülleharzes ist und B der Löslichkeitsparameter des Kernharzes ist.

**4.** Die Tinte von Anspruch 1 oder 3, worin das Hülleharz ein Polymer umfasst, enthaltend eine Monomereinheit mit einer anionischen oder einer nicht ionischen Gruppe.

**5.** Die Tinte von Anspruch 1, worin die farbigen Partikel dem folgenden Bedingungsverhältnis genügen:

(Höhe beim Peak der Partikeldurchmesser-Verteilungskurve) /

(Höhe beim Durchmesser mit dem 2-fachen des Partikeldurchmessers beim Peak der Partikeldurchmesser-Verteilungskurve) ≥ 1,5.

**6.** Die Tinte von einem der Ansprüche 1, 2, 4 und 5, worin die Tinte bei 850 nm eine Extinktion des Lichtes von nicht mehr als 2,5 hat, wenn die Tinte so verdünnt ist, dass die Extinktion des Lichtes bei der maximalen absorbierenden Wellenlänge 100 ist.

**7.** Die Tinte von einem der Ansprüche 1 bis 6, worin jedes der farbigen Partikel eine Kern/Hülle-Struktur hat.

**8.** Die Tinte von einem der Ansprüche 1 bis 7, worin die farbigen Partikel hergestellt sind durch Bilden einer Dispersion farbiger Partikel, umfassend farbige Partikel, die einen Farbstoff enthalten und ein Harz, dispergiert in wässrigem Medium und Umhüllung eines jeden Partikels der farbigen Partikel mit Harz.

**9.** Die Tinte von Anspruch 7, worin die Dispersion farbiger Partikel gebildet ist durch Auflösen eines Harzes und eines Farbstoffes in einem organischen Lösungsmittel, Emulsionsdispergieren der entstandenen Lösung oder Dispersion in Wasser, und dann Entfernen des organischen Lösungsmittels.

**10.** Die Tinte von Anspruch 9, worin die Dispersion farbiger Partikel gebildet ist durch Herstellung einer Harzpartikeldispersion durch Emulsionspolymerisation und Zusatz einer Farbstofflösung zur Dispersion, enthaltend einen in einem organischen Lösungsmittel gelösten Farbstoff.

**11.** Die Tinte von Anspruch 8, 9 oder 10, worin die Umhüllung ausgeführt wurde durch Zusatz eines Monomeren mit einer polymerisierbaren Doppelbindung zu den farbigen Partikeln und Emulsionspolymerisieren des Monomeren zur Adsorption auf den farbigen Partikeln.

**12.** Die Tinte von einem der Ansprüche 1 bis 11, worin die Tinte im Verlauf der Herstellung der Tinte einer Wärmebehandlung bei nicht weniger als 35°C unterworfen wurde.

**13.** Die Tinte von Anspruch 12, worin die Tinte im Verlauf der Herstellung der farbigen Partikel eine Wärmebehandlung bei nicht weniger als 35°C unterworfen wurde.

**14.** Ein bildlieferndes Verfahren, umfassend die Stufe Ausstoßen der Tinte von einem der Ansprüche 1 bis 13 aus einem Tintenstrahlkopf in einem Tröpfchenzustand, um auf einem Tintenempfangsmedium zu haften.

**15.** Ein bildlieferndes Verfahren von Anspruch 14, worin das Tintenempfangsmedium eine poröse Tintenempfangsschicht aufweist.

**Revendications**

**1.** Encre pour l'enregistrement par jet d'encre comprenant des particules colorées contenant un colorant et une résine, les particules colorées étant dispersées dans un milieu aqueux, dans laquelle la masse moléculaire moyenne en masse de la résine est entre 2 000 et 50 000, le paramètre de solubilité de la résine est entre 16 et 19 [MPa]$^{1/2}$, et le diamètre des particules à un pic de la courbe de distribution du diamètre des particules de la particule colorée est entre 5 et 50 nm.

**2.** Encre selon la revendication 1, dans laquelle la résine est dissoute dans l'acétate d'éthyle dans un rapport non inférieur à 50 % en poids à 25 °C.

**3.** Encre selon la revendication 1, dans laquelle la résine de coeur et la résine d'enveloppe satisfont à la formule

$$|A-B| \leq 2[MPa]^{1/2}$$

dans laquelle A est le paramètre de solubilité de la résine de enveloppe et B est le paramètre de solubilité de la résine de coeur.

**4.** Encre selon la revendication 1 ou 3, dans laquelle la résine d'enveloppe comprend un polymère contenant un motif monomère ayant un groupe anionique et un groupe non ionique.

**5.** Encre selon la revendication 1, dans laquelle les particules colorées satisfont à la condition de rapport suivante :

```
        (Hauteur au pic de la courbe de distribution du
diamètre des particules)/(Hauteur correspondant au
diamètre ayant deux fois le diamètre de particules au
pic de la courbe de distribution du diamètre des
particules) ≥ 1,5.
```

6. Encre selon l'une quelconque des revendications 1, 2, 4 et 5 dans laquelle l'encre a une absorbance de la lumière à 850 nm non supérieure à 2,5 lorsque l'encre est diluée de sorte que l'absorbance de la lumière à la longueur d'onde d'absorption maximum soit de 100.

7. Encre selon l'une quelconque des revendications 1 à 6, dans laquelle chacune des particules colorées a une structure coeur/enveloppe.

8. Encre selon l'une quelconque des revendications 1 à 7, dans laquelle les particules colorées sont préparées en formant une dispersion de particules colorées comprenant des particules colorées contenant un colorant et une résine dispersés dans un milieu aqueux, et en gainant chaque particule des particules colorées avec de la résine.

9. Encre selon la revendication 7 dans laquelle la dispersion de particules colorées est formée en dissolvant une résine et un colorant dans un solvant organique, en effectuant une dispersion en émulsion de la solution résultante ou une dispersion dans l'eau, et en éliminant ensuite le solvant organique.

10. Encre selon la revendication 9 dans laquelle la dispersion de particules colorées est formée en préparant une dispersion de particules de résine par polymérisation en émulsion, et en ajoutant une solution de colorant contenant un colorant dissous dans un solvant organique à la dispersion.

11. Encre selon la revendication 8, 9 ou 10, dans laquelle le gainage est conduit en ajoutant aux particules colorées un monomère ayant une double liaison polymérisable, et en polymérisant en émulsion le monomère de manière à l'adsorber sur les particules colorées.

12. Encre selon l'une quelconque des revendications 1 à 11, dans laquelle l'encre a été soumise à un traitement thermique à pas moins de 35 °C au cours de la production de l'encre.

13. Encre selon la revendication 12 dans laquelle l'encre est soumise à un traitement thermique à pas moins de 35 °C au cours de la production des particules colorées.

14. Procédé de formation d'image comprenant une étape consistant à éjecter l'encre selon l'une quelconque des revendications 1 à 13 d'une tête d'impression par jet d'encre à l'état de gouttelettes à faire adhérer à un milieu recevant l'encre.

15. Procédé de formation d'image selon la revendication 14, dans lequel le milieu recevant l'encre a une couche poreuse de réception d'encre.

# FIG. 1

EP 1 357 157 B1